# EUROPEAN PATENT SPECIFICATION

(11) **EP 3 478 514 B1**
(45) Date of publication and mention of the grant of the patent: **25.03.2020**
(21) Application number: 17731107.3
(22) Date of filing: 12.06.2017
(51) Int. Cl.: B60C 1/00, C08K 5/101

(54) **COMPOSITION COMPRISING ESTERS**
ZUSAMMENSETZUNG ENTHALTEND ESTER
COMPOSITION COMPORTANT DES ESTERS

(30) Priority: 29.06.2016 EP 16176787
(43) Date of publication of application: 08.05.2019
(73) Proprietor: Hansen & Rosenthal KG, 20457 Hamburg (DE)
(72) Inventor: BERGMANN, Cristina, 22523 Hamburg (DE)
(74) Representative: Eisenführ Speiser
(86) International application number: PCT/EP2017/064247
(87) International publication number: WO 2018/001707

(56) References cited:
- EP-A1- 2 112 003
- DE-T5-112011 102 060
- DE-U1-202011 110 368
- US-A1- 2013 030 102

## Description

The present invention relates to a composition comprising esters.

In particular, the invention relates to a composition for use as a plasticizer composition in a formulation for a tire or a technical rubber good or for use as an extender oil for decreasing the mooney-viscosity and/or the glass transition temperature (T_{g}) of a polymer composition (as defined in more detail below). The invention also relates to the use of a corresponding composition, to the use of one or more than one ester, and to a process of (a) preparing a formulation for making a tire or a technical rubber good or (b) making a tire or a technical rubber good or (c) preparing a polymer composition having a decreased mooney-viscosity, a formulation for making a tire or a technical rubber good and a corresponding tire or technical rubber good (as defined in more detail below). The invention is defined in the attached claims, and specific aspects are additionally defined below.

20 - 25 % of the fuel consumption of a car results from the rolling resistance of its tires; for trucks these values are even higher.

These values have led the EU-Commission to impose new regulations for the use of tires with low rolling resistance on the automotive industry. For new cars, this law came into force in 2011 (REGULATION (EC) No 443/2009 Of The European Parliament And Of The Council, 23 April (2009); REGULATION (EU) No 510 /(2011) Of The European Commission, Directorate General Climate Action, 11 May (2011); H.L. Proposal for a Directive Of The European Parliament And Of The Council, November 13, 2008, (COM (2008) 0779); Amended Proposal for a Regulation of the European Parliament And Of The Council, (COM (2009)348 final), June 30,2009).

The majority of newly produced tires are sold on the market to replace old and worn tires. From 2012 on, even tires replacing old ones must bear a label setting their fuel efficiency, wet grip and abrasion. This measure shall help customers to decide which tires to buy for replacing the old ones. Significant importance is also given to lowering the rolling resistance of tires which serves the goal to reduce the emitted CO₂/km due to reduced fuel consumption. Other countries and international organizations have imposed similar requirements on the automotive industry (see, e.g., Notice of Environmental Protection Agency (EPA) And Department Of Transportation (DOT) of Upcoming Joint Rulemaking to Establish Vehicle GHG Emissions and CAFE Standards, June (2009); International Council on Clean Transportation (ICCT), April (2010); Department of Transportation (DOT) Proposes New Tire Fuel Efficiency Ratings for American Consumers, June 18, (2009); Japan for Sustainability (JFS) Newsletter No. 95, July 2010).

A measure for the rolling resistance and the wet grip is the loss factor tan δ.

The tan δ value determined at a temperature of at 60 to 70 °C (hereinafter abbreviated as "tan δ 60°C") should be as low as possible thus indicating a low rolling resistance and a low fuel consumption.

The tan δ value determined at a temperature of 0 °C (hereinafter abbreviated as "tan δ 0°C") should be as high as possible, thus indicating a high wet grip and making maneuvers with automobiles on wet street surfaces safer.

Furthermore, the abrasion of a tire is preferably as low as possible in order to extend the life time of a tire and to maintain a good performance of the tire during its life time.

The three aforementioned properties
(i) rolling resistance,
(ii) wet grip,
   and
(iii) abrasion
   form together the so called "magic triangle" of car tires.

In practice, the abrasion should not be negatively affected by the increase of the wet grip and the decrease in rolling resistance.

More generally, the improvement of one property, for example in rolling resistance, should not be achieved by the expense of another property as, for example, wet grip or abrasion.

According to document US 9290643 B2, the parameters wet grip, rolling resistance and abrasion (the so-called "magical triangle") re mutually restricted. There is thus a need in industry for a tire for which at least two of the three above-mentioned parameters are improved.

The aforementioned general disclosure regarding wet grip, rolling resistance and abrasion also applies to tires made by a process of the present invention or by the inventive use of a composition.

Moreover, due to the strict requirements of Directive EC 769/76/EEC as well as 67/548/EC (passed by the European Commission) plasticizers as distilled aromatic extracts (DAE) should be replaced in plasticizer compositions used in a formulation for a tire or a technical rubber good.

Alternatives to DAE are oils not classified according to CLP Regulation 1272/2008, e.g. MES (mild extracted solvate), RAE (residual aromatic extract), TRAE (treated residual aromatic extract), (H)NAP ((heavy) naphthenic oil), and treated distilled aromatic extract (TDAE). The oils should comprise less polycyclic aromatic hydrocarbons (PAH) than DAE and comply with the REACH Annex XVII Entry 50 (1-4). In the last years extensive research was done on the manufacturing of polymers with higher polarity in order to improve the interaction between polymers of a polymer matrix and fillers usually present in a polymer matrix and, as a result, the final properties of the polymer materials. Furthermore, during the last decades the tread wear of tires has been decreased continuously. Nowadays long lasting tires can be used up to 80.000 miles so that the main reason for tire inspection and replacement are ageing processes resulting from the exposure to air or sun light. Tires are particularly prone to such ageing processes as the air pressure inside the tire is higher than the atmospheric pressure. The properties in focus are, for example, the hardness, the tear strength, the elongation at break, or the tensile strength. Likewise, modern technical rubber goods are also subject to ageing processes resulting in deteriorated properties.

Generally, technical rubber goods are designed to resist negative influences such as contact with fluids at elevated temperatures or exposure to heat. Defects caused by such negative influences can occur when one or more components of a fluid, e.g. lubricating oil, diffuse into the technical rubber good leading to cracks on its surfaces.

Moreover, during heat exposure, shrinking and embrittlement can occur on or inside technical rubber goods. Therefore, technical rubber goods, which undergo ageing processes, should favorably have improved mechanical and dynamical properties.

Thus, there is a great need for compositions for use as a plasticizer composition in a formulation for a tire or a technical rubber good or for use as an extender oil for decreasing the mooney-viscosity of a polymer composition and for a process of making a tire and technical rubber good wherein the resulting tires or technical rubber goods have improved mechanical properties, e.g. a longer elongation at break, higher tensile strength and, in case of a rubber good, a higher tear strength.

Analogous needs exist with respect to a process of preparing a formulation for making a tire or a technical rubber good or for preparing a polymer composition having a decreased mooney-viscosity, with respect to a formulation for making a tire or a technical rubber good and with respect to a corresponding tire or technical rubber good.

Different teachings regarding rubber compositions or additives thereof have been reported in the patent literature:
EP 0670347 A1 relates to rubber compositions containing reinforcing additives. Rubber mixtures are disclosed "containing at least one crosslinker, a filler, optionally further rubber auxiliaries and at least one reinforcing additive".

DE 4435311 A1 relates to "Verstärkungsadditive" (title). The "reinforcing additives are made of oligomer and/or polymer, sulphur-containing organo-organo-oxysilanes, optionally other unsaturated hydrocarbon-containing organo-organo-oxysilanes and rubber-reinforcing semi-active, active and/or highly active soots" (see abstract).

WO 2011/028337 A2 relates to the "use of surface-treated carbon blacks in an elastomer to reduce compound hysteresis and tire rolling resistance and improve wet traction" (title).

EP 2700512 A1 relates to a "Kautschukmischung" (title). The corresponding mixture comprises at least one coumarone-indene resin, at least one diene rubber and a vucalization system.

US 2003/0114571 A1 relates to a "wet traction in tire treads compounded with surface modified siliceous and oxidic fillers" (title). It is reported that the "wet traction of a vehicle tire is significantly improved" by the inclusion of "a surface-treated (hydrophobated) siliceous or oxidic filler in the vulcanized rubber compound used for the tire tread" (see abstract).

EP 2452971 A1 relates to "Sauerstoffhaltige Verbindungen als Weichmacher für Kautschuk" (title). The oxygen-containing compound as plasticizers for rubber" is a fatty acid ester having the formula R¹-COOR² (see paragraph [0010]).

US 7335692 B2 relates to a "rubber composition for tire tread" (title). Said rubber composition comprises "one or more synthetic and/or natural compounds not extracted from petroleum [...] said compounds comprising at least one glycerol fatty acid triester, and the fatty acid(s) as a whole comprise oleic acid", "one or more paraffinic, aromatic or naphthenic type plasticizing oils extracted from petroleum" (see abstract). "The rubber composition usable as a tread for a tire" results in "a high level of grip performance on dry and damp ground in comparison to known compositions, without adversely affecting the rolling resistance" (see column 2, lines 63 to 67).

WO 2012/048874 A1 relates to "Synthetische Weichmacheröle für Polyurethanfullüngen" (title). Said synthetic processing oils for polyurethane fillings "contain at least [...] alkylbiphenyl or arylbiphenyl or alkylnaphthalene or arylnaphthalin or a mixture thereof" (see claim 1).

EP 1893677 B1 relates to a "rubber mixture and tyre" (title). A "sulfur-crosslinkable rubber mixture" is disclosed comprising "at least one diene rubber, [...] at least one carbon black" and "a petroleum fraction of RAE (residual aromatic extract) type, as a plasticizer" (see claim 1). A corresponding "tire, in particular pneumatic tire for a vehicle" is disclosed (claim 5).

US 2007/0123631 A1 relates to "functionalized rubbery polymers" (title). A corresponding rubbery composition comprises "(A) a silica filler, (B) optionally, a silica coupling agent, [...] and (C) a rubbery polymer" (see claim 1).

EP 2 112 003 A1 discloses a tire rubber composition comprising: 1 to 50 parts by weight of oil formed by combining natural fat with modified rosin-based resin, relative to 100 parts by weight of rubber material.

DE 11 2011 102060 T5 discloses a rubber composition for use in tires, comprising: a diene rubber; from 60 to 120 parts by weight per 100 parts by weight of the diene rubber, a silicon dioxide having a nitrogen-specific surface area (N2SA) as measured according to JIS K6217-2 of 170 to 225 m 2 / g; from 4 to 10% by weight of the silica, a silane coupling agent; to 1/2 or less of the added amount of the silica, a softening component comprising a terpene resin and an oil (provided that not less than 1 part by weight of terpene resin is blended); and from 0.5 to 10 parts by weight of a mixture of a fatty acid metal salt (other than zinc salts) and a fatty acid ester.

US 2013/030102 A1 discloses a tire rubber composition which includes: a rubber component; a plasticizer (a); and at least one of a resin and a plasticizer (b), the resin being at least one selected from the group consisting of aromatic petroleum resins, terpenic resins, and rosin resins. The plasticizer (a) has a glass transition point of -50° C or lower. The resin and the plasticizer (b) each have a glass transition point of -40° C to 20° C.

A very important prerequisite for the process of preparing a formulation for making a tire or technical rubber good is adequate mixing equipment in order to process rubber compounds of high viscosity. Processing of viscous compounds and mixtures frequently results in a slower compounding throughput and an increased need for energy (for example for increasing the process temperature) or the need to use additional viscosity reducing agents. A suitable composition for use as a plasticizer composition in a formulation for a tire or a technical good or for use as an extender oil for decreasing the mooney-viscosity of a polymer composition should therefore have an appropriate viscosity which does not significantly increase during its use.

Correspondingly, it was a primary object of the present invention to provide for a composition which can be used as a plasticizer composition in a formulation for a tire or a technical rubber good and/or which can be used as an extender oil for decreasing the mooney-viscosity of a polymer composition.

The composition to be provided and to be used as a plasticizer composition in a formulation for a tire or a technical rubber good or as an extender oil for decreasing the mooney-viscosity of a polymer composition should preferably not comprise DAE or TDAE.

The composition to be provided should preferably allow making a tire or a technical rubber good having
- a longer elongation at break,
- a higher tensile strength
   and, in case of making a rubber good,
- a higher tear strength.

In particular, the composition to be provided and to be used as a plasticizer composition in a formulation for a tire should allow making a tire having
- an increased wet grip
- a decreased rolling resistance
   and
- an abrasion which is not negatively affected by the increase in wet grip or/and the decrease in rolling resistance.

Correspondingly, it was a further object of the present invention to provide for a corresponding process of
(a) preparing a formulation for making a tire or a technical rubber good
   and
(b) making a tire or a technical rubber good.

Additionally, it was a further object of the present invention to provide for a corresponding formulation for making a tire or a technical rubber good and a corresponding tire or technical rubber good.

Finally, in accordance with the preferred composition to be provided, it was a further object of the present invention to provide a polymer composition comprising an amount of the composition according to the invention (to be provided) which decreases the mooney-viscosity (in comparison with a comparison composition not comprising the composition of the present invention but being otherwise identical).

The primary object of the present invention is achieved by a composition for use as a plasticizer composition in a formulation for a tire or a technical rubber good or for use as an extender oil for decreasing the mooney-viscosity and/or the glass transition temperature (T_{g}) of a polymer composition, wherein the composition comprises as ingredients
- one or more than one ester selected from the group consisting of fatty acid alkyl esters and fatty acid aryl esters,
   and
- one or more than one resin selected from the group consisting of coumarone-indene resins, petroleum hydrocarbon resins and phenol formaldehyde resins,
   wherein the total amount of said esters and said resins is above 80 % by weight, based on the total amount of the composition.

Throughout the present text, the term "tire" designates
(a) tires consisting of a single rubber-based material,
(b) tires comprising a body and a tread as well as, optionally, further components,
   and
(c) the tire tread (or simply "tread") of a tire additionally comprising a body and optionally one or more further components.

Herein, a tire can be a solid tire or a pneumatic tire. The "tread" of a tire designates the rubber component of a tire on its circumference that makes contact with the road or the ground. As stated above, if not indicated otherwise, the term "tire" throughout the present specification also indicates the tread of a tire.

Preferably, the composition of the present invention is a composition for use as a plasticizer composition in a formulation for a silica tire and/or a carbon black tire.

In the context of the present invention "fatty acid alkyl esters and fatty acid aryl esters" are ester compounds which bear a single ester unit.

Throughout the text, the term "aryl" includes "heteroaryl" and correspondingly the term "fatty acid aryl esters" includes "fatty acid heteroaryl esters". However, in preferred fatty acid aryl esters of the present invention, the "aryl" group is not a "heteroaryl" group, but is a group derived from a non-hetero arene, i.e. from an arene only containing carbon ring atoms, by removal of a hydrogen atom from any ring carbon (which in the fatty acid aryl ester is bonded to an oxygen atom).

In the context of the present invention, a phenol formaldehyde resin is a resin produced by the polycondensation of a phenol (or a phenol derivate) and formaldehyde.

In the context of the present invention a coumarone-indene resin preferably is a resin which can be produced by polymerization from coal tar and gas tar distillates and/or is a resin comprising coumarone units of formula (A-cou) and indene units of formula (A-ind), respectively;

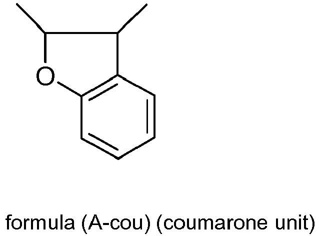

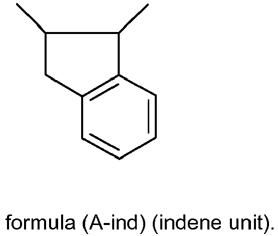

In the context of the present invention, a petroleum hydrocarbon resin preferably is produced from by-products of petroleum cracking (i.e. C5,C9 fractions), by pretreatment and polymerization of the C5,C9 fractions and distillation of the resulting mixture after polymerization.

Such definitions have been extensively described in literature like I. Benedek, M. M. Feldstein, Technology of Pressure-Sensitive Adhesives and Products, 2009, CRC Press, or R. H. Schuster, G. Thielen, M. L. Hallensleben, KGK 3, 232, 1991.

It is preferred that a composition of the invention additionally comprises as ingredients one or more than one further additive such as ethers, which are typically produced by etherification of alcohols, or diesters, which are typically produced by esterification of both carboxylic acid groups of a diacid with alcohols. Such substances have been extensively described in literature like G. Wypych, Handbook of Plasticizers, 2004, ChemTec Publishing.

Surprisingly, compositions as described above for the use as a plasticizer composition in a formulation for a tire or a technical rubber good result in a corresponding tire or technical rubber good having a longer elongation at break, a higher tensile strength and, in case of a rubber good, a higher tear strength. Particularly surprising was that tires prepared using compositions as described above for the use as a plasticizer composition in a formulation for a tire had an increased wet grip and a decreased rolling resistance while the abrasion is not negatively affected.

A composition as described above (or as described above as being preferred) is preferred, wherein the total amount of said esters selected from the group consisting of fatty acid alkyl esters and fatty acid aryl esters, and said resins is above 90 % by weight, preferably above 95 % by weight, based on the total amount of the composition.

A composition as described above (or as described above as being preferred) is preferred, wherein the proportions of the total amount of said esters selected from the group consisting of fatty acid alkyl esters and fatty acid aryl esters is 40 % by weight or lower, based on the total amount of said esters and said resins, preferably 30 % by weight or lower, more preferably in the range of from 10 to 25 % by weight.

A composition as described above (or as described above as being preferred) is preferred, wherein the total amount of said one or more than one ester selected from the group consisting of fatty acid alkyl esters and fatty acid aryl esters is preferably 5 to 40 % by weight more preferably 10 to 30 % by weight, even more preferably 15 to 25 % by weight, based on the total amount of the composition according to the present invention.

A composition as described above (or as described above as being preferred) is preferred, wherein the total amount of said one or more than one resin selected from the group consisting of coumarone-indene resins and petroleum hydrocarbon resins is an amount of preferably 40 to 95 % by weight, more preferably 60 to 90 % by weight, most preferably 65 to 85 % by weight, based on the total amount of the composition according to the present invention.

A composition as described above (or as described above as being preferred) is preferred, wherein the total amount of said one or more than one further additive as described above is at most 10 % by weight, preferably at most 6 % by weight, more preferably 3 % by weight, based on the total amount of the composition according to the present invention.

The total amount of said one or more than one ester selected from the group consisting of fatty acid alkyl esters and fatty acid aryl esters, said one or more than one resin and said one or more than one further additive of the composition according to the present invention is preferably 100 % by weight, based on the total amount of the composition according to the present invention.

By increasing the total amount of said esters as described above to over 40 % by weight, the flashpoint of a corresponding composition is decreased to such an extent that additional safety measures have to be taken.

In contrast thereto, if the total amount of said esters as described above is below 5 % by weight the resulting highly viscous composition (as well as the resulting highly viscous formulation) is difficult to process on an industrial scale in a process for making a tire or a technical rubber good due to a slow mixing, and a bad dispersion with the product mixture as well as with the fillers. In order to lower the viscosity and thus allowing for an adequate processing, a higher process temperature is needed which also requires costly equipment.

A composition as described above (or as described above as being preferred) is preferred, wherein said one or at least one of said more than one esters selected from the group consisting of fatty acid alkyl esters and fatty acid aryl esters is a compound of formula (I) 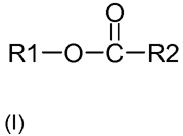 wherein
- R1 is
   a substituted or unsubstituted aryl radical having a total number of 22 carbon atoms or less, preferably having a total number of 10 carbon atoms or less, preferably selected from the group consisting of substituted and unsubstituted phenyl,
   or
   a substituted or unsubstituted, branched or linear, alkyl radical having a total number of 22 carbon atoms or less, preferably selected from the group consisting of ethyl, propyl, butyl, pentyl, hexyl, heptyl, octyl, and benzyl, more preferably 2-ethyl-hexyl,
   and
- R2 is a substituted or unsubstituted, branched or linear, saturated or unsaturated aliphatic hydrocarbon radical having a total number of 21 carbon atoms or less, preferably a linear, saturated or unsaturated aliphatic hydrocarbon radical having 21 carbon atoms or less, more preferably a linear, unsaturated aliphatic hydrocarbon radical having 21 carbon atoms or less and one, two or three double bonds, wherein R2 most preferably is a linear, unsaturated aliphatic hydrocarbon radical having 17 carbon atoms or less and one double bond.

If not indicated otherwise, the "total number" of carbon atoms in a specified radical is the total number in the radical including any substituents. I.e., when counting the total number of carbon atoms in a substituted radical the carbon atoms in the substituent are also counted.

Esters according to formula (I) have preferred properties regarding the viscosity and the corresponding flashpoint.

If the corresponding fatty acid alkyl ester or the fatty acid aryl ester bears more than a total number of 22 carbon atoms the viscosity of the resulting composition is too high for industrial processing (due to a slow mixing and bad dispersion with the product mixture as well as with the fillers). In order to lower the viscosity and thus allowing for an adequate processing a higher process temperature is needed which also requires costly equipment.

In contrast thereto, if the total number of carbon atoms is below 10 the flashpoint of the resulting composition decreased to such an extent that additional safety measures have to be taken.

In many cases a composition as described above (or as described above as being preferred) is preferred, wherein said one or at least one of said more than one esters selected from the group consisting of fatty acid alkyl esters and fatty acid aryl esters is a compound of formula (I) 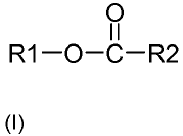 wherein
- R1 is a substituted or unsubstituted, branched or linear, alkyl radical having a total number of 22 carbon atoms or less, preferably selected from the group consisting of ethyl, propyl, butyl, pentyl, hexyl, heptyl, octyl, and benzyl, more preferably 2-ethylhexyl,
   and
- R2 is a substituted or unsubstituted, branched or linear, saturated or unsaturated aliphatic hydrocarbon radical having a total number of 21 carbon atoms or less, preferably a linear, saturated or unsaturated aliphatic hydrocarbon radical having 21 carbon atoms or less, more preferably a linear, unsaturated aliphatic hydrocarbon radical having 21 carbon atoms or less and one, two or three double bonds, wherein R2 most preferably is a linear, unsaturated aliphatic hydrocarbon radical having 17 carbon atoms or less and one double bond.

A composition as described above (or as described above as being preferred) is even more preferred, wherein said one or at least one of said more than one fatty acid alkyl esters is selected from the group consisting of
alkyl arachidonate,
alkyl linoleate,
alkyl linolenate,
alkyl laurate,
alkyl myristate,
alkyl oleate,
alkyl caprate,
alkyl oleate,
alkyl stearate,
alkyl palmitate,
alkyl caprylate
alkyl caproate,
alkyl butyrate,
and
alkyl behenate,
preferably the one or at least one of said more than one fatty acid alkyl esters is 2-ethylhexyl oleate.

Fatty acid alkyl esters as described above have superior properties in terms of oxidation stability due to the fact that these materials have a low number of double bounds and thus are even more suitable for industrial applications. Furthermore, a decreased susceptibility to oxidation of the fatty acid alkyl esters as described above as being preferred further increases the life time of a resulting tire or technical rubber good.

Moreover, fatty acid alkyl esters as described above do not contain any polycyclic aromatic hydrocarbons and thus they can meet the new environmental standards described above.

Particularly preferred is a composition as described above (or as described above as being preferred) which is obtainable by mixing its ingredients.

A corresponding composition obtained by mixing its ingredients is easily prepared and represents a better solubility medium for potential further components or additives.

A composition as described above (or as described above as being preferred) is preferred obtainable by mixing with the other ingredient(s) of the composition one or more than one resin having a softening point according to ASTM D3461-14 in the range of from 5 to 50 °C, preferably in the range of from 20 to 35 °C, and being selected from the group consisting of coumarone-indene resins, petroleum hydrocarbon resins, terpene resins, kolophonium resins and phenol formaldehyde resins.

Corresponding compositions are advantageous because their viscosity is in a range which allows for an easy and fast processing of the corresponding formulations to a tire or a technical rubber good due to the reasons described above.

Preferred is a composition as described above, obtainable by mixing with the other ingredient(s) of the composition one or more than one resin having a softening point according to ASTM D3461-14 in the range of from 5 to 50 °C, preferably in the range of from 20 to 35 °C, and being selected from the group consisting of coumarone-indene resins and petroleum hydrocarbon resins.

Corresponding compositions are even more advantageous because their viscosity is in an even more favorable range (see above for more details).

In particular, a composition as described above (or as described above as being preferred) is preferred comprising
- 2-ethylhexyl oleate,
   and
- one or more than one resin selected from the group consisting of coumarone-indene resins and petroleum hydrocarbon resins,
   wherein the total amount of 2-ethylhexyl oleate and said resins selected from the group consisting of coumarone-indene resins and petroleum hydrocarbon resins is above 95 % by weight, based on the total amount of the composition, and
   wherein the proportion of the total amount of said 2-ethylhexyl oleate is 35 % by weight or lower, based on the total amount of said 2-ethylhexyl oleate and said resins, wherein the proportion of the total amount of said 2-ethylhexyl oleate is more preferably in the range of from 10 to 25 % by weight.

A corresponding composition or formulation has the optimum ingredients and properties providing, e.g. a favorable viscosity, a convenient handling and/or a high flashpoint, for industrial processing of the corresponding composition to a resulting formulation or of the resulting formulation to a tire or a technical rubber good as discussed above.

The invention also relates to a use of a composition as described above (or as described above as being preferred)
(i) as an extender oil for decreasing the mooney-viscosity of a polymer composition and/or
(ii) as an extender oil for decreasing the glass transition temperature (T_{g}) of a polymer composition
   and/or
(ii) as a plasticizer composition in a formulation for a tire or a technical rubber good.

Using a corresponding composition as a plasticizer composition in a formulation for a tire or a technical rubber good or as an extender oil for decreasing the mooney-viscosity of a polymer composition has advantageous effects as described above for compositions as described above (or as described above as being preferred).

Preferred is the use as described above of a composition as described above (or as described above as being preferred) as a plasticizer composition in a formulation for a tire, preferably in a formulation for a tire comprising one or more fillers selected from the group consisting of silica and carbon black.

Silica and carbon black filler are more effective reinforcing filler than other types of fillers.

The invention also relates to a use, preferably to a use as described above (or as described above as being preferred), of a composition as described above (or as described above as being preferred) as
- a wet grip increasing
- an abrasion loss decreasing
- a rolling resistance decreasing
and/or
- a tensile strength increasing
additive in a formulation for a tire.

Additives in a formulation for a tire as described above result in a tire which has an increased wet grip, a decreased abrasion loss, a decreased rolling resistance, and/or an increased tensile strength compared to a tire known in the prior art. The aforementioned improvements result in specific technical advantages when such additives are used in a formulation for a tire, (e.g. an increased grip on wet street surfaces, a longer lifetime or a corresponding tire decreases the fuel consumptions of cars using the corresponding tire).

The invention also relates to a use, preferably to a use as described above (or as described above as being preferred), of a composition as described above (or as described above as being preferred) for improving
- the tensile strength of an aged technical rubber good,
- the tear strength of an aged technical rubber good
- the hardness of an aged technical rubber good,
   and/or
- the elongation of an aged technical rubber good.

An aged technical rubber good is a technical rubber good which was subject to an ageing process as described in the examples hereinbelow.

When a composition as described above is used for the preparation of a technical rubber good and the resulting technical rubber good is exposed to ageing processes (e.g. ageing process as described in the examples hereinbelow), the resulting aged technical rubber good has improved properties as described above compared to aged technical rubber goods known from the prior art.

Additives in a formulation for a technical rubber good as described above result in an aged technical rubber good which has an increased tear strength and/or better properties (indicated by a smaller change in 100% Modulus, and elongation at break or tensile strength) compared to aged technical rubber goods known from the prior art. The aforementioned improvements result in specific technical advantages when such additives are used in a formulation for a technical rubber good (e.g. a longer lifetime of the technical rubber good under thermal and/or mechanical stress).

The invention also relates to a use (preferably as described above) of one or more than one ester selected from the group consisting of fatty acid alkyl esters and fatty acid aryl esters
(i) as co-plasticizer in a formulation for a tire or a technical rubber good
   and/or
(ii) as an ingredient of an extender oil for a polymer composition, preferably for decreasing the mooney-viscosity of the polymer composition
   and/or
(iii) as an ingredient of an extender oil for a polymer composition for decreasing the glass transition temperature (T_{g}) of the polymer composition.

Fatty acid alkyl esters and fatty acid aryl esters used as co-plasticizer in a formulation for a tire or a technical rubber good or as an ingredient of an extender oil are advantageous since adding fatty acid alkyl esters and fatty acid aryl esters to a formulation for a tire or a technical rubber good or to an extender oil decreases the mooney-viscosity of the formulation or of the extender oil. Preferably, said esters are used in combination with said one or more than one resin selected from the group consisting of coumarone-indene resins, petroleum hydrocarbon resins and phenol formaldehyde resins. Insofar, the advantages as discussed above are caused by the inventive use.

The invention also relates to a process of
(a) preparing a formulation for making a tire or a technical rubber good
   or
(b) making a tire or a technical rubber good,
   or
(c) preparing a polymer composition having a decreased mooney-viscosity and/or glass transition temperature (T_{g}) (in comparison with a composition not comprising an ester selected from the group consisting of fatty acid alkyl esters and fatty acid aryl esters),
the process comprising the following steps:
- providing one or more than one ester selected from the group consisting of fatty acid alkyl esters and fatty acid aryl esters,
- providing one or more than one resin selected from the group consisting of coumarone-indene resins, petroleum hydrocarbon resins, terpene resins, kolophonium resins, and phenol formaldehyde resins,
- mixing said one or more than one esters and said one or more than one resin selected from the group consisting of coumarone-indene resins, petroleum hydrocarbon resins and phenol formaldehyde resins with further ingredients,
wherein the total amount of said one or more than one esters and said one or more than one resin is preferably 90 wt.-% or more, based on the total weight of the resulting mixture.

Generally, all aspects of the present invention discussed herein above in the context of a composition for use as a plasticizer composition in a formulation for a tire or a technical rubber good or for use as an extender oil for decreasing the mooney-viscosity and/or the glass transition temperature (T_{g}) of a polymer composition, to the corresponding use of the composition, apply *mutatis mutandis* to a process for preparing a corresponding formulation for making a tire or a technical rubber good, a corresponding process for making a tire or a technical rubber good, and a process of preparing a polymer composition having a decreased mooney-viscosity and/or glass transition temperature (T_{g}). And likewise, all aspects of a process for preparing a corresponding formulation for making a tire or a technical rubber good, a corresponding process for making a tire or a technical rubber good, and a process of preparing a polymer composition having a decreased mooney-viscosity and/or glass transition temperature (T_{g}) discussed herein below apply *mutatis mutandis* to a composition for use as a plasticizer composition in a formulation for a tire or a technical rubber good or for use as an extender oil for decreasing the mooney-viscosity and/or the glass transition temperature (T_{g}) of a polymer composition according to the invention and to the inventive use of a corresponding composition.

A process as described above results in a tire which surprisingly has advantageous technical effects as, for example, an increased wet grip, a decreased rolling resistance, and/or an increased tensile strength.

Moreover, a process as described above surprisingly results in a technical rubber good which has advantageous technical effects as, for example, an increased tensile strength, an increased tear strength, and an increased hardness of an aged technical rubber good, and/or a longer elongation of an aged technical rubber good.

Surprisingly, a process as described above also results in a polymer composition having a decreased mooney-viscosity and/or glass transition temperature (T_{g}) and can thus, as described above, more conveniently be processed in a process of preparing a formulation for making a tire or a technical rubber good or a process of making a tire or a technical rubber good.

A process as describe above is preferred, wherein the process comprises:
- preparing a composition as described above (or as described above as being preferred) by pre-mixing said one or more than one ester selected from the group consisting of fatty acid alkyl esters and fatty acid aryl esters with said one or more than one resin selected from the group consisting of coumarone-indene resins, petroleum hydrocarbon resins, terpene resins, kolophonium resins, and phenol formaldehyde resins,
- mixing said composition with said further ingredients.

Due to the premixing of said one or more than one ester with said one or more than one resin the resulting tire or technical rubber good has unexpectedly superior properties over processes without said pre-mixing.

A process as described above (or as described above as being preferred) is preferred, wherein one or more of said further ingredients are selected from the group consisting of natural and synthetic rubbers, reinforcing filler, non-reinforcing filler, vulcanization accelerators, pigments, antioxidants, antiozone waxes, cross-linking agents, organic or inorganic coloring agents, activators, and silane coupling agents,
wherein said reinforcing filler or said non-reinforcing filler is preferably selected from the group consisting of silica and carbon black.

Preferred cross-linking agents are vulcanisation agents, particularly preferred are sulfur compounds, more particularly preferred is sulfur (e.g. Rhenogran S-80 available available from Rhein Chemie Additives).

By mixing said further ingredients with a composition of the invention a tire or a technical rubber good with advantageous technical effects as described above can be prepared.

It is preferred that the composition of the present invention is used in tires and technical rubber goods made of rubbers or blends of them, e.g., natural rubber (NR), epoxidized natural rubber (ENR), Polyisoprene (IR), polybutadiene (BR); styrene-butadiene-copolymers (SBR), including solution SBR (SSBR) and emulsion SBR (ESBR), isoprene-butadiene copolymers (IBR), isoprene-butadiene-styrene-copolymers (ISBR), butyl rubber (IIR), halogenated butyl rubber (X-IIR), acrylonitrile-butadiene rubber (NBR), hydrogenated acrylonitrile-butadiene rubber (HNBR), ethylene-propylene-diene rubber (EPDM) and chloroprene rubber (CR).

It is also preferred that the composition of the present invention is used in tires and technical rubber goods made of natural and synthetic rubbers or blends of them which may comprise a filler, e.g. a reinforcing filler or a non-reinforcing filler. The (reinforcing or non-reinforcing) filler may be selected from the group of carbon black, silica or inorganic fillers such as clay, calcium carbonate, magnesium carbonate and the like. The (reinforcing or non-reinforcing) filler is preferably carbon black and silica. The specific surface area (N₂) of silica is preferably not more than 200 m²/g, more preferably not more than 180 m²/g. When the BET is above 200 m²/g, the viscosity of the compound will increase and therefore the processing is negatively influenced. For the silica compounds, it is preferred to use a silane coupling agent in combination with silica. The silane coupling agent may be selected from the sulfide silane coupling agent. The combination of silane coupling agent with silica results in a lower rolling resistance and improved wear resistance. The carbon black can be selected, for example, from FEF (Fast Extruding Furnace), GPF (General Purpose Furnace Black), SRF (Semi-Reinforcing Furnace), HAF (High Abrasion Furnace), ISAF (Intermediate SAF) and SAF (Super Abrasion Furnace) but is not limited to these examples. The carbon black used is more preferably HAF, ISAF and SAF, due to their good properties in respect of wear resistance of the rubber composition.

Examples of suitable sulfide silane coupling agent are:
- Bis[3-(triethoxysilyl)propyl]tetrasulfide
   or
- Bis[3-(triethoxysilyl)propyl]disulfide.

A composition of the present invention suitably contains besides natural and synthetic rubbers or blends, fillers and / or silane coupling agents, additives conventionally used in rubber industries such as vulcanization accelerators, pigments, antioxidants, antiozone waxes, cross-linking agents as sulfur, organic or inorganic coloring agents, activators.

The invention also relates to a formulation for making a tire or a technical rubber good,
obtainable by a process as described above (or as described above as being preferred)
and/or
comprising a composition as described above (or as described above as being preferred).

Generally, all aspects of the present invention discussed herein above in the context of a composition for use as a plasticizer composition in a formulation for a tire or a technical rubber good, to the corresponding use of the composition and a corresponding process according to the invention apply *mutatis mutandis* to a formulation for making a tire or a technical rubber good according to the invention. And likewise, all aspects of a formulation for making a tire or a technical rubber good according to the invention discussed herein below apply *mutatis mutandis* to a composition for use as a plasticizer composition in a formulation for a tire or a technical rubber good, to the corresponding use of the composition and a corresponding process according to the invention.

The present invention also relates to a tire or a technical rubber good,
obtainable by a process as described above (or as described above as being preferred)
and/or
comprising the ingredients of a composition as described above (or as described above as being preferred)
and preferably additionally comprising one or more further ingredients selected from the group consisting of natural and synthetic rubbers, reinforcing filler, non-reinforcing filler, vulcanization accelerators, pigments, antioxidants, antiozone waxes, cross-linking agents, organic or inorganic coloring agents, activators, and silane coupling agents, wherein said reinforcing filler or said non-reinforcing filler is preferably selected from the group consisting of silica and carbon black. Generally, all aspects of the present invention discussed herein above in the context of a composition for use as a plasticizer composition in a formulation for a tire or a technical rubber good, corresponding use of the composition, a corresponding process and a formulation for making a tire or a technical rubber good according to the invention apply *mutatis mutandis* to a tire or a technical rubber good according to the invention. And likewise, all aspects of a tire or a technical rubber good according to the invention discussed herein below apply *mutatis mutandis* to a composition for use as a plasticizer composition in a formulation for a tire or a technical rubber good, to the corresponding use of the composition, to a corresponding process and to a formulation for making a tire or a technical rubber good according to the invention.

The invention is illustrated in detail hereinafter by examples.

### Examples:

### Determination methods:

### 1. Cure characteristics

The cure characteristics (e.g. the curing times T50, t90 and the parameter "Fmin-Fmax [dNm]") were determined at 170°C according to DIN 53529 (part 3) by using, for example, an Alpha Technologies Rheometer MDR 2000.

### 2. Mooney viscosity

The mooney viscosity (e.g. parameters "I-Value [MU]" and "ML (1+4) [MU]") was determined according to DIN 53523/3 at 100°C by using, for example, a Rubber Process Analyzer MV 2000.

### 3. Hardness

The hardness was determined before and after ageing the samples in air for 70 h at 100°C according to DIN ISO 7619-1 by using, for example, a Zwick 3114/5 (Shore A).

### 4. Mechanical properties

The mechanical properties (elongation at break, tensile strength, 100% Modulus and 200% Modulus) were determined according to DIN 53504 (by using a Zwick tensile test machine, for example, a Zwick 5109 or Zwick Z005 mit X-Force HP). The rebound was determined according to DIN 53512 (by using, for example, a Zwick 5109). The tear strength was determined by DIN 34-1:2004.

### 5. Dynamic properties

The dynamic properties (for example, tan δ 60°C indicating changes in the rolling resistance and tan δ 0°C indicating changes in the wet grip) were determined according to DIN 53513 (by using, for example, a Gabo Eplexor 500N).

### 6. Abrasion

The abrasion was determined according to ISO 4649 by using, for example, a Zwick 6103.

### 7. Ageing processes

The ageing processes were conducted in air or in IRM 902 ASTM reference oil (CAS-number: 64742-52-5) at different temperatures for different periods (i.e. ageing time) in a laboratory airing cupboard.

### 8. Glass transition temperature

The glass transition temperature was determined according to ISO 11357-2.

### Chemicals used:

- Rubbers:
   (1) Buna VSL 5025-0 HM is a solution styrene-butadiene-rubber (S-SBR) and available from the company "ARLANXEO".
   (2) Buna SB 1500 is an emulsion styrene-butadiene-rubber (E-SBR) and available from the company "ARLANXEO"
   (3) Bayprene 110 is a neodymium butadiene-rubber and available from the company "ARLANXEO",
   (4) Bayprene 230 is chlorprene rubbers (CR) and available from the company " ARLANXEO",
   (5) Buna CB 24 is chlorprene rubbers (CR) and available from the company " ARLANXEO",
      and
   (6) Sprintan SLR 4602 is a functionalized styrene-butadiene-rubber (SBR) and available from the company "Trinseo".
- Silica:
   (1) Ultrasil 7000 GR available from Evonik Industries AG;
   (2) Hi-Sil 233,
   (3) Hi-Sil 210 available from PPG.
- Carbon blacks (available from Orion Engineered Carbons):
   (1) N 234,
   (2) N 330,
   (3) N 550.
- Silane coupling agent: Si 69 available from Evonik Industries AG.
- Zinc oxide: ZnO RS available from Grillo Zinkoxid GmbH.
- Magnesium oxide: Elastomag 170 MgO available from Akrochem Corporation.
- Stearic acid available from NOF Corporation.
- Antiozone wax: Negozone 3457 available from Hansen & Rosenthal KG
- TDAE available from Hansen & Rosenthal KG
- Antioxidants:
   (1) Vulkanox HS available from ARLANXEO;
   (2) Vulkanox 4020 available from ARLANXEO;
   (3) Rhenofit OCD available from RheinChemie Additives.
- Curing agents:
   (i) Vulcanisation accelerators:
      (1) Vulkacit CZ available from ARLANXEO;
      (2) Vulkacit D available from ARLANXEO;
      (3) Rhenogran MTT-80 available from RheinChemie Additives.
   (ii) Vulcanisation activator: Rhenogran HPCA-50 available from RheinChemie Additives
   (iii) Vulcanisation agent: Rhenogran S-80 available available from Rhein Chemie Additives

### Compositions according to the invention:

The following compositions of the invention (see table 1a, entries C4, C5, C6, C7, C8 and C9, below) for the use as plasticizers have been used as such in a formulation for a tire or a technical rubber good (see examples hereinbelow).

In the case of C5.1 and C7.1, the corresponding formulations (for example F5.1 and F7.1 for the formulation of a silica tire, see below) have not been pre-mixed before they were added in the first step of the corresponding mixing protocol (see TABLE 2 and TABLE 5 below). However, C5 and C5.1 have the same ester/resin ratio and C7 and C7.1 have the same ester/resin ratio.

**Table 1a. Compositions and ingredients for use as plasticizers or as an extender oil**

| composition | ester ingredient | content (wt.-%) | resin ingredient | content (wt.-%) |
|---|---|---|---|---|
| C4 | 2-ethylhexyloleate | 20 | petroleum-based hydrocarbon-resin; polymer of aromatic C9-/C10-hydrocarbons | 80 |
| C5 | 2-ethylhexyloleate | 30 | petroleum-based hydrocarbon-resin; polymer of aromatic C9-/C10-hydrocarbons | 70 |
| C6 | 2-ethylhexyloleate | 20 | coumarone-indene resin; polymer of carbon-based aromatic C9-/C10-hydrocarbons | 80 |
| C7 | 2-ethylhexyloleate | 30 | coumarone-indene resin; polymer of carbon-based aromatic C9-/C10-hydrocarbons | 70 |
| C8 | 1,4-butanediyl-(9Z,9'Z)-bis(-9-octadecenoate) | 20 | petroleum-based hydrocarbon-resin; polymer of aromatic C9-/C10-hydrocarbons | 80 |
| C9 | Decahydro-2-naphtyl-9-octadecenoate) | 30 | petroleum-based hydrocarbon-resin; polymer of aromatic C9-/C10-hydrocarbons | 70 |

The compositions C4 to C9 shown in table 1 can also be used as extender oils.

### Mixing process of formulations for silica tires:

The investigated tire tread formulations are presented in TABLE 1 (for silica tires) and TABLE 3 (for carbon black tires). The compounds depicted in TABLE 1 were mixed in an internal mixer in accordance with the mixing procedures described in TABLE 2 and the compounds depicted in TABLE 3 were mixed according to the TABLE 5. The curing agents (Vulcanisation accelerators, Vulcanisation activators and Vulcanisation agent) were added in a two-roll mill at 50°C. The silica tire treads were prepared according to ISO 5794/3. The resulting formulations were vulcanised at the rheometer optimum at 170 °C to give the corresponding silica or carbon black tire.

The investigated formulations for technical rubber goods are presented in TABLE 4 (axle boots). The compounds were mixed in an internal mixer in accordance with the mixing procedures as described in TABLE 5. The curing agents (Vulcanisation accelerators, Vulcanisation activators and Vulcanisation agent) were added in a two-roll mill at 50°C. The resulting formulations were vulcanised at the rheometer optimum at 170 °C to give the corresponding rubber good (axle boots, rolls and gaskets, or hoses).

**TABLE 1. Ingredients (including composition according to the invention) of formulations for silica tires**

| Ingredients | phr (parts per hundred rubber) | | | | | | | | | |
|---|---|---|---|---|---|---|---|---|---|---|
| | F1 | F2 | F4 | F5 | F5.1* | F6 | F7 | F7.1* | F8 | F9 |
| Rubber 1 | 100 | 0 | 100 | 100 | 100 | 100 | 100 | 100 | 0 | 0 |
| Rubber 6 | 0 | 100 | 0 | 0 | 0 | 0 | 0 | 0 | 100 | 100 |
| Silica 1 | 70.0 | 70.0 | 70.0 | 70.0 | 70.0 | 70.0 | 70.0 | 70.0 | 70.0 | 70.0 |
| Silane coupling agent | 5.6 | 5.6 | 5.6 | 5.6 | 5.6 | 5.6 | 5.6 | 5.6 | 5.6 | 5.6 |
| Zinc oxide | 2.5 | 2.5 | 2.5 | 2.5 | 2.5 | 2.5 | 2.5 | 2.5 | 2.5 | 2.5 |
| Stearic acid | 1.0 | 1.0 | 1.0 | 1.0 | 1.0 | 1.0 | 1.0 | 1.0 | 1.0 | 1.0 |
| Antioxidant 1 | 1.0 | 1.0 | 1.0 | 1.0 | 1.0 | 1.0 | 1.0 | 1.0 | 1.0 | 1.0 |
| Antioxidant 2 | 1.0 | 1.0 | 1.0 | 1.0 | 1.0 | 1.0 | 1.0 | 1.0 | 1.0 | 1.0 |
| Vulcanisation accelerator 1 | 1.8 | 1.8 | 1.8 | 1.8 | 1.8 | 1.8 | 1.8 | 1.8 | 1.8 | 1.8 |
| Vulcanisation accelerator 2 | 2.0 | 2.0 | 2.0 | 2.0 | 2.0 | 2.0 | 2.0 | 2.0 | 2.0 | 2.0 |
| Vulcanisation agent | 1.5 | 1.5 | 1.5 | 1.5 | 1.5 | 1.5 | 1.5 | 1.5 | 1.5 | 1.5 |
| TDAE | 37.5 | 37.5 | | | | | | | | |
| C4 | | | 37.5 | | | | | | 37.5 | |
| C5 | | | | 37.5 | 37.5 | | | | | 37.5 |
| C6 | | | | | | 37.5 | | | | |
| C7 | | | | | | | 37.5 | 37.5 | | |

| | | | | | | | | | | |
|---|---|---|---|---|---|---|---|---|---|---|
| * ester and resin have not been pre-mixed before they were added in the first step of the mixing protocol (see table "mixing protocol 1" below). Thus, both ingredients (ester and resin) were separately added into the mill and not as a composition. | | | | | | | | | | |

| Table 2. Mixing steps for silica tire compounds (including composition according to the invention) | |
|---|---|
| First step: internal mixer, 60°C, 100 rpm^{a)} | |
| Mixing sequence | 0.0 min rubber 1 |
| | 1.0 min ½ silica 1 + ½ silane coupling agent |
| | 2.0 min ½ silica 1 + ½ silane coupling agent + composition ^{b)} |
| | 4.0 min Zinc oxide + Stearic acid |
| | 5.0 min sweep |
| | 6.0 min dump |

| Second step (after 24 h at 23 °C): internal mixer, 60°C, 140 rpm ^{a)} | |
|---|---|
| Mixing sequence | 0.0 min mix from the first step |
| | 5.0 min dump |

| Third step (after 24 h at 23 °C): open mill, 20°C, 10/10 rpm ^{a)} | |
|---|---|
| Mixing sequence | 0.0 min vulcanisation agents and accelerators |
| | 6.0 min cross blend and sheet off |

| | |
|---|---|
| ^{a)} rpm - rotation per minute ^{b)} TDAE, C4, C5, C6, C7, | |

Mixing process of formulations for carbon black tires and for technical rubber goods:

**TABLE 3. Ingredients (including composition according to the invention) of formulations for carbon black tires**

| Ingredients | phr (parts per hundred rubber) | | | | | | |
|---|---|---|---|---|---|---|---|
| | B1 | B4 | B5 | B6 | B7 | B8 | B9 |
| Rubber 2 | 100.0 | 100.0 | 100.0 | 100.0 | 100.0 | 100.0 | 100.0 |
| Carbon black 1 | 60.0 | 60.0 | 60.0 | 60.0 | 60.0 | 60.0 | 60.0 |
| Zinc oxide | 2.5 | 2.5 | 2.5 | 2.5 | 2.5 | 2.5 | 2.5 |
| Stearic acid | 1.0 | 1.0 | 1.0 | 1.0 | 1.0 | 1.0 | 1.0 |
| Antioxidant 1 | 1.0 | 1.0 | 1.0 | 1.0 | 1.0 | 1.0 | 1.0 |
| Antioxidant 2 | 1.0 | 1.0 | 1.0 | 1.0 | 1.0 | 1.0 | 1.0 |
| Vulcanisation accelerator 1 | 1.8 | 1.8 | 1.8 | 1.8 | 1.8 | 1.8 | 1.8 |
| Vulcanisation accelerator 2 | 2.0 | 2.0 | 2.0 | 2.0 | 2.0 | 2.0 | 2.0 |
| Vulcanisation agent | 1.5 | 1.5 | 1.5 | 1.5 | 1.5 | 1.5 | 1.5 |
| TDAE | 37.5 | | | | | | |
| C4 | | 37.5 | | | | | |
| C5 | | | 37.5 | | | | |
| C6 | | | | 37.5 | | | |
| C7 | | | | | 37.5 | | |
| C8 | | | | | | 37.5 | |
| C9 | | | | | | | 37.5 |

**TABLE 4. Ingredients (including composition according to the invention) of formulations for technical rubber goods (axle boots)**

| Ingredients | phr (parts per hundred rubber) | | | | |
|---|---|---|---|---|---|
| | AB1 | AB4 | AB5 | AB6 | AB7 |
| Rubber 3 | 100.0 | 100.0 | 100.0 | 100.0 | 100.0 |
| Carbon black 2 | 50.0 | 50.0 | 50.0 | 50.0 | 50.0 |
| Zinc oxide | 2.0 | 2.0 | 2.0 | 2.0 | 2.0 |
| Stearic acid | 0.5 | 0.5 | 0.5 | 0.5 | 0.5 |
| Antioxidant 3 | 2.0 | 2.0 | 2.0 | 2.0 | 2.0 |
| Vulcanisation accelerator 3 | 1.0 | 1.0 | 1.0 | 1.0 | 1.0 |
| Vulcanisation activator | 4.2 | 4.2 | 4.2 | 4.2 | 4.2 |
| TDAE | 25.0 | | | | |
| C4 | | 25.0 | | | |
| C5 | | | 25.0 | | |
| C6 | | | | 25.0 | |
| C7 | | | | | 25.0 |

**TABLE 5. Mixing steps for carbon black tire or for a technical rubber goods (including composition according to the invention)**

| First step: internal mixer, 50°C, 50 rpm^{a)} | |
|---|---|
| Mixing sequence | 0.0 min rubber^{b)} |
| | 2.0 min ½ carbon black + ½ composition ^{c)} |
| | 3.0 min ½ carbon black + ½ composition ^{c)} |
| | 5.0 min Zinc oxide + Stearic acid |
| | 7.0 min sweep |
| | 10.0 min dump |

| Second step (after 24 h at 23 °C): open mill, 20°C, 10/10 rpm ^{a)} | |
|---|---|
| Mixing sequence | 0.0 min vulcanisation agents and accelerators |
| | 6.0 min cross blend and sheet off |

| | |
|---|---|
| ^{a)} rpm - rotation per minute ^{b)} Rubber 2, 3, 4, 5 ^{c)}TDAE, composition C4, composition C5, composition C6, composition C7, composition C8 or composition C9 for carbon black tires and TDAE, composition C4, composition C5, composition C6 or composition C7 for technical rubber goods (axle boots) | |

### Example 1 (silica tires)

Example 1 shows a comparative evaluation of seven formulations for a silica tire and of the corresponding resulting silica tires of such formulations prepared with either TDAE (as reference) or different compositions according to the invention. The formulation F1 comprised the reference oil TDAE; the other six formulations comprised compositions according to the invention. The same amount of TDAE oil or of a composition according to the invention was added to the other ingredients of the formulation for silica tires as described in table 1 above. The obtained formulations were mixed and vulcanized as described in TABLE 2 above. The results of the cure characteristics of the different resulting formulations as well as the hardness before and after ageing, the mechanical and dynamical properties, and abrasion loss of the corresponding resulting tires are summarized in TABLE 6 below.

| TABLE 6. | | | | | | | |
|---|---|---|---|---|---|---|---|
| Silica formulations | F1* | F4 | F5 | F5.1 | F6 | F7 | F7.1 |
| Cure characteristics of silica tire formulations | | | | | | | |
| T50 [min] | 4.5 | 3.8 | 3.8 | 3.5 | 3.5 | 3.7 | 3.7 |
| t90 [min] | 17.2 | 17.3 | 17.3 | 16.6 | 16.4 | 17.1 | 17.8 |
| Fmax-Fmin [dNm] | 13.8 | 12.4 | 12.4 | 12.6 | 12.3 | 12.4 | 12.5 |

| Properties of resulting silica tires | | | | | | | |
|---|---|---|---|---|---|---|---|
| Hardness [Shore A] | | | | | | | |
| at 23°C, before ageing | 57 | 58 | 58 | 54 | 57 | 57 | 54 |
| after ageing for 70 h at 100°C | 60 | 60 | 61 | 57 | 58 | 58 | 57 |
| | | | | | | | |

| Mechanical properties | | | | | | | |
|---|---|---|---|---|---|---|---|
| Rebound [%] | 16 | 14 | 19 | 18 | 16 | 21 | 20 |
| Elongation at break [%] | 260 | 240 | 260 | 330 | 300 | 290 | 300 |
| Tensile strength [MPa] | 12.1 | 16.7 | 16.6 | 18 | 18.2 | 16.7 | 16.3 |
| 100% Modulus [MPa] | 2.5 | 3.7 | 3.1 | 2.3 | 2.8 | 2.8 | 2.4 |
| 200% Modulus [MPa] | 8.0 | 12.9 | 10.9 | 8.0 | 9.7 | 9.3 | 8.5 |
| | | | | | | | |

| Dynamic properties | | | | | | | |
|---|---|---|---|---|---|---|---|
| | | | | | | | |

| Rolling resistance: | | | | | | | |
|---|---|---|---|---|---|---|---|
| Tan δ 60°C | 0.100 | 0.064 | 0.063 | 0.0814 | 0.072 | 0.071 | 0.081 |
| Tan δ 60°C, Normalized | 100 | 64 | 63 | 81 | 72 | 71 | 81 |
| Change [%] | 0 | +36 | +37 | +19 | +28 | +29 | +19 |

| Wet grip: | | | | | | | |
|---|---|---|---|---|---|---|---|
| Tan δ 0°C | 0.841 | 1.071 | 0.830 | 0.826 | 0.963 | 0.668 | 0.670 |
| Tan δ 0°C, Normalized | 100 | 127 | 98 | 98 | 115 | 79 | 79 |
| Change [%] | 0 | +27 | -2 | -2 | +15 | -21 | -21 |
| | | | | | | | |
| Abrasion loss [mm³] | 152 | 128 | 132 | n.d. | 128 | 129 | n.d. |

| | | | | | | | |
|---|---|---|---|---|---|---|---|
| * reference: with TDAE as plasticizer; n.d. = not determined | | | | | | | |

The measurements of the mechanical properties of a tire of the present invention showed that all compositions according to the present invention (C4, C5, C6, C7) improved the tensile strength of the resulting silica tire compared to a silica tire prepared with TDAE. The following improvements in terms of tensile strength were observed
38 % for silica tires prepared with formulation F4,
37 % for silica tires prepared with formulation F5,
50 % for silica tires prepared with formulation F6
   and
38% for silica tires prepared with formulation F7,
in each case compared to a silica tire prepared with TDAE (see formulation F1 in table 6).

A higher tensile strength indicates a better filler dispersion and therefore a better filler polymer interaction, which is leading to better final properties of the tire, as for example tensile strength.

An advantage of the formulations F5 and F7 comprising premixed compositions C5 and C7, respectively, are the higher values for the 100 % Modulus and 200 % Modulus, in comparison with F5.1 and F7.1.

The use of compositions C4, C5, C6 and C7 of the present invention (in the corresponding formulations) caused a significant increase in the 100 % Modulus and 200 % Modulus as well as a decrease of the rolling resistance (Tan δ 60°) of the resulting tires in comparison with tires prepared with TDAE (silica formulation F1).

TABLE 6 also shows the comparison between two key parameters often used in the tire industry to predict compound performance, rolling resistance and wet grip, namely tan δ 60°C and tan δ 0°C. Lower tan δ 60°C indicates a lower rolling resistance and a higher tan δ 0°C is indicative for a better wet grip.

As shown in TABLE 6, formulations according to the invention improved (i.e. decreased) the tan δ 60°C to a large extent. Generally, the pre-mixed compositions improved overall properties if compared with the not pre-mixed compositions. formulation F4 (resin and fatty acid ester were pre-mixed) improved the tan δ 60°C of the resulting silica tire by +36 %,
formulation F5 (resin and fatty acid ester were pre-mixed) by +19 %,
formulation F6 (resin and fatty acid ester were pre-mixed) by +28 %
and
formulation F7 (resin and fatty acid ester were pre-mixed) by +29 %,

in each case in comparison to the tan δ 60°C values of silica tires prepared with TDAE(see formulation F1 in table 6). Thus, pre-mixing ester and resin is advantageous.

Additionally, formulations F4 and F6 according to the invention drastically improved the tan δ 0°C. Formulation F4 increased (i.e., improved) the tan δ 0°C by +27 %, formulation F6 by +15. Formulations F4 and F6 comprise compositions C4 and C6, wherein the proportion of the total amount of esters selected from the group consisting of fatty acid alkyl esters and fatty acid aryl esters is in the range of from 10 to 25 % by weight, based on the total amount of said compositions (consisting of ester ingredient and resin ingredient).

Furthermore, a decreased abrasion loss was measured for tires prepared with formulations F4, F5, F6 and F7 comprising premixed compositions. Lower values for abrasion loss were obtained for tires prepared with premixed compositions of the invention in comparison with the reference tire (see formulation F1) prepared with TDAE (see last row of Table 6). Moreover, the hardness of the comparative tire and tires of the invention was not changed significantly.

Thus, silica tires made with a formulation of the present invention have superior properties in comparison with a reference formulation using TDAE as plasticizer composition.

### Example 2 (carbon black tires):

### Formulations B4 to B7 (as examples for formulations of the invention)

Example 2 shows a comparative evaluation of five formulations for carbon black tires and the corresponding resulting carbon black tires of such formulations prepared with either TDAE (as reference) or different compositions according to the invention. The formulation B1 contained the reference oil TDAE; the other four formulations contained compositions according to the invention. The same amount of TDAE oil or of a composition according to the invention was added to the other ingredients of the formulation for silica tires as described in table 3 above. The obtained formulations were mixed and vulcanized as described above in TABLE 5 above. The results of the cure characteristics of the different formulations and the hardness before and after ageing, the mechanical and dynamical properties of the corresponding resulting tires are summarized in TABLE 7 below.

| TABLE 7. | | | | | |
|---|---|---|---|---|---|
| Carbon black tire formulations | B1* | B4 | B5 | B6 | B7 |
| Cure characteristics of carbon black tire formulations | | | | | |
| T50 [min] | 1.6 | 1.0 | 1.1 | 0.9 | 1.0 |
| t90 [min] | 2.9 | 1.7 | 1.8 | 1.6 | 1.6 |
| Fmax-Fmin [dNm] | 9.1 | 6.9 | 7.0 | 6.8 | 6.7 |

| Properties of resulting carbon black tires | | | | | |
|---|---|---|---|---|---|
| Hardness [Shore A] | | | | | |
| at 23°C, before ageing | 50 | 47 | 48 | 49 | 46 |
| after ageing for 70 h at 100°C | 55 | 55 | 54 | 56 | 55 |
| | | | | | |

| Mechanical properties | | | | | |
|---|---|---|---|---|---|
| Rebound [%] | 37 | 38 | 39 | 38 | 38 |
| Elongation at break [%] | 710 | 790 | 800 | 780 | 790 |
| 100% Modulus [MPa] | 1.1 | 0.9 | 0.8 | 0.8 | 0.9 |
| | | | | | |

| Dynamic properties | | | | | |
|---|---|---|---|---|---|
| | | | | | |

| Rolling resistance: | | | | | |
|---|---|---|---|---|---|
| Tan δ 60°C | 0.307 | 0.320 | 0.288 | 0.301 | 0.295 |
| Tan δ 60°C, Normalized | 100 | 104 | 94 | 98 | 96 |
| Change [%] | 0 | -4 | +6 | +2 | +4 |

| Wet grip: | | | | | |
|---|---|---|---|---|---|
| Tan δ 0°C | 0.236 | 0.268 | 0.264 | 0.274 | 0.276 |
| Tan δ 0°C, Normalized | 100 | 113 | 112 | 116 | 117 |
| Change [%] | 0 | +13 | +12 | +16 | +17 |

| | | | | | |
|---|---|---|---|---|---|
| * reference: with TDAE as plasticizer | | | | | |

As indicated in TABLE 7 for carbon black tires made according to a process of the present invention, the hardness before and after ageing and the mechanical properties were not significantly affected by the use of compositions of the present invention in comparison to carbon black tires prepared with TDAE as plasticizer composition (formulation F1). However, the experimental results depicted in TABLE 7 clearly show that compositions of the present invention improved significantly the wet grip (tan δ 0°C) as well as the rolling resistance (tan δ 60°C) of all carbon black tires made according to a process of the present invention (see formulations B4 to B7 in TABLE 7) in comparison to carbon black tires prepared with TDAE as plasticizer composition.

Formulation B4 (resin and fatty acid ester were pre-mixed) improved the tan δ 0°C of the resulting silica tire by +13 %,
formulation B5 (resin and fatty acid ester were pre-mixed) by +12 %,
formulation B6 (resin and fatty acid ester were pre-mixed) by +16 %
and
formulation B7 (resin and fatty acid ester were pre-mixed) by +17 %,

in each case in comparison to the tan δ 0°C of silica tires prepared with TDAE (see formulation B1 in table 7).

Thus, carbon black tires made with a formulation of the present invention have superior properties in comparison with state-of-the-art formulations using TDAE as plasticizer composition.

### Formulations B8 and B9 (as examples of formulations of the invention):

Similar results were obtained when the carbon black tires were prepared with the compositions B8 and B9 comprising esters different from 2-ethylhexyloleate. The results for the rolling resistance (tan δ 60°C) and the wet grip (tan δ 0°C) are shown in TABLE 8 and TABLE 9.

| TABLE 8. | | | |
|---|---|---|---|
| | | | |

| Carbon black tire formulations | B1 (reference) | B8 | B9 |
|---|---|---|---|
| Dynamic properties of resulting carbon black tires | | | |
| Rolling resistance: | | | |
| Tan δ 60°C | 0.307 | 0,301 | 0.305 |
| Tan δ 60°C, Normalized | 100 | 98 | 99 |
| Change [%] | 0 | +2 | +1 |

| TABLE 9. | | | |
|---|---|---|---|
| Carbon black tire formulations | B1 (reference) | B8 | B9 |
| Dynamic properties of resulting carbon black tires | | | |
| wet grip: | | | |
| Tan δ 0°C | 0.236 | 0.256 | 0.245 |
| Tan δ 0°C, Normalized | 100 | 108 | 104 |
| Change [%] | 0 | +8 | +4 |

The rolling resistance of carbon black tires prepared with the formulations B8 and B9 were decreased (i.e. improved) by 2% compared to a carbon black tire prepared with TDAE as plasticizer composition.

The wet grip of carbon black tires prepared with the formulations B8 and B9 were increased by +8%, respectively +4% compared to a carbon black tire prepared with TDAE as plasticizer composition.

### Example 3 (technical rubber goods - axle boots):

Example 3 shows a comparative evaluation of five formulations for technical rubber goods and the corresponding resulting technical rubber goods, both prepared with either TDAE or a composition AB4, AB5, AB6 and AB7 according to the invention. The formulation AB1 contained the reference oil TDAE; the other four formulations contained compositions according to the invention. The same amount of TDAE oil or of a composition according to the invention was added to other ingredients of the formulation for silica tires as described in table 4 above. The obtained formulations were mixed and vulcanized as described above in TABLE 5 above. The results of the cure characteristics of the different formulations and the hardness before and after ageing, the mechanical and dynamical properties of the corresponding resulting tires are summarized in TABLE 10 below.

| TABLE 10. | | | | | |
|---|---|---|---|---|---|
| Formulations for technical rubber goods (axle boots) | AB1* | AB4 | AB5 | AB6 | AB7 |
| Cure characteristics of formulations for technical rubber goods (axle boots) | | | | | |
| T50 [min] | 4.2 | 3.7 | 3.8 | 3.6 | 3.8 |
| T90 [min] | 15.6 | 15.7 | 15.5 | 15.5 | 15.7 |
| Fmax-Fmin [dNm] | 11.8 | 11.6 | 11.6 | 11.5 | 11.6 |

| Properties of resulting technical rubber goods (axle boots) | | | | | |
|---|---|---|---|---|---|
| Hardness [Shore A] | | | | | |
| at 23°C , before ageing | 61 | 61 | 61 | 63 | 62 |
| after ageing in hot air for 72 h at 120°C | 62 | 64 | 64 | 65 | 65 |
| Change in hardness [%] | +2 | +5 | +5 | +3 | +5 |
| | | | | | |

| Mechanical properties | | | | | |
|---|---|---|---|---|---|
| Tear strength [N/mm] | 16 | 24 | 18 | 19 | 13 |
| | | | | | |

| Elongation at break [%] | | | | | |
|---|---|---|---|---|---|
| at 23°C , before ageing | 370 | 370 | 380 | 370 | 370 |
| after ageing in hot air for 72 h at 120°C | 360 | 400 | 390 | 400 | 390 |
| Change in elongation[%] | -3 | +8 | +3 | +8 | +5 |
| | | | | | |

| 100% Modulus [MPa] | | | | | |
|---|---|---|---|---|---|
| at 23°C , before ageing | 2.7 | 2.9 | 2.7 | 2.9 | 2.8 |
| after ageing in hot air for 72 h at 120°C | 3.0 | 3.0 | 2.9 | 3.0 | 2.9 |
| Change in 100% Modulus [%] | +11 | +3 | +7 | +3 | +4 |
| | | | | | |

| Tensile strength [MPa] | | | | | |
|---|---|---|---|---|---|
| at 23°C , before ageing | 17.8 | 18.3 | 17.7 | 18.2 | 18.2 |
| after ageing in hot air for 72 h at 120°C | 18.0 | 20.0 | 19.2 | 20.0 | 19.0 |
| Change in Tensile strength [%] | +1 | +9 | +8 | +10 | +6 |

| | | | | | |
|---|---|---|---|---|---|
| * reference: with TDAE as plasticizer | | | | | |

The results set forth in TABLE 10 show that the use of compositions of the present invention in a formulation for a technical rubber good increases the tear strength of the obtained technical rubber good (i.e. axle boots as in TABLE 10 above) due to an improved polymer network. This is also indicated by the 100% Modulus which is very low after ageing in hot air in comparison to axle boots prepared with TDAE.

Additionally, and in comparison with aged technical rubber goods prepared with TDAE as plasticizer composition, the elongation at break of aged technical rubber goods is increased (i.e. improved) when compositions of the present invention are present in a formulation for the technical rubber good.

The use of compositions of the invention in a formulation for a technical rubber good improves the technical properties of aged technical rubber goods by having a lower 100% Modulus compared to an aged technical rubber good reference. As a consequence, the life time of the technical rubber goods of the present invention (i.e. comprising a formulation of the present invention) is increased.

### Example 4 (Use of a composition of the invention as extender oil):

Tables 13 and 14 show the values of the resulting mooney viscosity after the addition of
(i) composition C7 (as an example of a composition of the invention)
   or
(ii) TDAE (as a comparative example)
   to different rubbers. Composition C7 was added to NR (resulting in a NR mixture), ENR 25 (resulting in a ENR 25 mixture) and Buna VSL 5025-0 HM (resulting in a Buna VSL 5025-0 HM mixture), see tables 13 to 14.

The addition of compositions of the invention decreases the mooney viscosity of the resulting mixture due to the plasticizing effect of the compositions of the invention. This indicates a better compatibility or interaction of the compositions of the invention with the polymer chains.

Tables 13 and 14 illustrate that the addition of a composition of the invention to polymer compositions decreases the mooney viscosity of the resulting compositions to a larger extent than the addition of the bench mark plasticizer (TDAE).

**Table 13. Mooney Viscosity (MU - mooney Unit) as influenced by addition of composition C7**

| amount of composition C7 [phr] | mooney viscosity of NR mixture [MU] | mooney viscosity of ENR 25 mixture [MU] | mooney viscosity of Buna VSL 5025-0 HM mixture [MU] |
|---|---|---|---|
| 0 | 47 | 45 | 69 |
| 10 | 38 | 33 | 41 |
| 30 | 23 | 19 | 19 |
| 50 | 14 | 12 | 11 |
| 70 | 10 | 7 | 7 |

**Table 14. Mooney Viscosity (MU - mooney Unit) by addition of composition TDAE**

| amount of composition C7 [phr] | mooney viscosity of NR mixture [MU] | mooney viscosity of ENR 25 mixture [MU] | mooney viscosity of Buna VSL 5025-0 HM mixture [MU] |
|---|---|---|---|
| 0 | 47 | 45 | 69 |
| 10 | 40 | 40 | 52 |
| 30 | 25 | 22 | 27 |
| 50 | 18 | 13 | 16 |
| 70 | 12 | 8 | 10 |

Without wishing to be bound to any theory, it is believed that by the addition of compositions of the invention to a rubber mixture, the free volume in the system and the polymer chain mobility increase while the intermolecular forces between the chains decrease [see also J. A. Brydson, Rubber Materials Elsevier Applied Science, New York, 1988]. Therefore, a drop in glass transition and viscosity of the mixture will occur associated with changes in rheological and physical properties of the rubber melts as well as of the corresponding cured materials [see also G. R. Hamed, Rubber Chem. Technol., 54 (1981) 576]. The glass transition temperature of the resulting mixture comprising the rubber and a composition of the invention decreases until the phase separation is reached (see Table 15 and Table 16).

The compatibility of compositions of the invention with different rubbers was investigated by studying how the addition of different amounts of compositions of the invention to different rubber mixtures as defined in table 15 effects the glass transition temperature of the resulting rubber mixture.

An analogous experiment was done with TDAE of which the results are shown in table 16.

The results of are shown in tables 15 and 16.

**Table 15. Glass transition (in °C) as influenced by addition of composition C7 of the invention**

| amount of composition C7 [phr] | T_{g} of NR mixture (°C) | T_{g} of ENR 25 mixture (°C) | T_{g} of Buna VSL 5025-0 HM mixture (°C) |
|---|---|---|---|
| 0 | -63 | -40 | -19 |
| 10 | -67 | -47 | -35 |
| 30 | -73 | -59 | -50 |
| 50 | -73 | -69 | -64 |
| 70 | -74 | -68 | -78 |

The data of table 15 shows that the addition of composition C7 of the invention to a rubber mixture results in a decrease in the glass transition temperature.

The strongest decrease in the glass transition temperature was observed for the rubber mixture "Buna VSL 5025-0 HM mixture" by 59 °C (compare first value in the last column of table 15 with the last value in the last column of table 15).

**Table 16. Glass transition (in °C) by addition of composition TDAE**

| amount of composition TDAE [phr] | T_{g} of NR mixture (°C) | T_{g} of ENR 25 mixture (°C) | T_{g} of Buna VSL 5025-0 HM mixture (°C) |
|---|---|---|---|
| 0 | -63 | -40 | -19 |
| 10 | -63 | -39 | -20 |
| 30 | -62 | -41 | -25 |
| 50 | -61 | -43 | -27 |
| 70 | -61 | -43 | -30 |

An addition of the composition C7 up to 30 phr into the NR rubber lowers the T_{g} of the resulting mixture by 10°C, while a similar addition of TDAE leads to unchanged glass transition temperature (compare second column of table 15 with fist column of table 16). An addition of the composition C7 up to 50 phr into the ENR 50 lowers the T_{g} of the resulting mixture by 19°C while an similar addition of TDAE lowers the glass transition temperature by only 3 °C (compare third column of table 15 with third column of table 16).

An addition of the composition C7 up to 70 phr into Buna VSL 5025-0 HM mixture lowers the T_{g} of the resulting mixture by 59°C while a similar addition of TDAE lowers the glass transition temperature by only 11 °C (compare fourth column of table 15 with fourth column of table 16).

These results show that compositions of the invention are very compatible with rubbers and can be used as extender oils for decreasing the mooney-viscosity and the glass transition temperature T_{g} of polymers compositions. In particular, the resulting drop of the mooney-viscosity and the glass transition temperature T_{g} due to the addition of a composition of the invention is much stronger than the decrease of the mooney-viscosity and the glass transition temperature T_{g} due to the addition of a TDAE (compare last row of table 15 with last row of table 16).

Additionally, the strong decrease in glass transition temperature of rubber mixtures as described in table 15 shows that compositions of the invention can be advantageously used in a formulation for making a tire, preferably a winter or snow tire, in order to adjust the corresponding mechanical and dynamic properties of the resulting tire. In particular, flexible tire materials better absorb mechanical shocks and have more contact with the road surface, thus having a better traction.

Without wishing to be bound by any theory, a measure for the rigidity of a tire is the glass transition temperature of the tire material. The tire material usually is for example a vulcanized rubber mixture or a vulcanized formulation for making a tire according to the invention. The lower the glass transition temperature of an unvulcanized rubber mixture (to be used as a starting material for producing the tire) the lower is the glass transition temperature of the corresponding tire material as produced, i.e. comprising the vulcanized rubber mixture. As a consequence, the temperature, at which the tire becomes rigid (less flexible) and thus brittle, is reduced as well.

It is thus advantageous to reduce the glass transition temperature of an unvulcanized rubber mixture in order to reduce the glass transition temperature of the corresponding tire material, e.g. a vulcanized formulation of the invention or a vulcanized polymer composition (for an example of a polymer composition see rubber mixtures as in table 15), so that the corresponding tire can be safely used at low temperatures, in particular at temperatures below 0°C or even below -10°C.

### Example 5 (Use of a composition of the invention as extender oil):

Example 5 shows a comparative evaluation of three silica tire formulations (F2 (reference), F8 and F9; see table 1 for the concentrations of the different ingredients) containing different compositions as extender oil (TDAE as a reference composition; compositions C4 and C5 according to the invention). Formulation F2 contains the reference oil TDAE. Formulation F8 contains composition C4 according to the invention and formulation F9 contains composition C5 according to the invention. The same amount of oil was added to the other ingredients of the formulation for silica tires as defined in table 4 above.

The obtained formulations were mixed and vulcanized as described above in TABLE 2. Cure characteristics, hardness before and after ageing, mechanical and dynamical properties, and abrasion tests were conducted on the rubber formulations F2, F8 and F9. The results are summarized in TABLE 17 below.

**TABLE 17.**

| Silica formulations | F2 (reference) | F8 | F9 |
|---|---|---|---|
| Cure characteristics of silica tire formulations | | | |
| T50 [min] | 4.4 | 3.0 | 3.0 |
| t90 [min] | 14.9 | 14.4 | 14.2 |
| Fmax-Fmin [dNm] | 13.8 | 13.5 | 13.4 |

| Properties of resulting silica tires | | | |
|---|---|---|---|
| Hardness [Shore A] | | | |
| at 23°C, before ageing | 55 | 56 | 54 |
| after ageing for 70 h at 100°C | 56 | 58 | 56 |
| | | | |

| Mechanical properties | | | |
|---|---|---|---|
| Rebound [%] | 31 | 29 | 35 |
| Elongation at break [%] | 320 | 300 | 290 |
| Tensile strength [MPa] | 17.4 | 18.6 | 17.3 |
| 100% Modulus [MPa] | 2.6 | 2.9 | 2.9 |
| 200% Modulus [MPa] | 8.5 | 9.9 | 9.8 |
| | | | |

| Dynamic properties | | | |
|---|---|---|---|
| Rolling resistance: | | | |
| Tan δ 60°C | 0.064 | 0.045 | 0.049 |
| Tan δ 60°C, Normalized | | 0.064 | 0.064 |
| Change [%] | | +30 | +23 |
| | | | |

| Wet grip: | | | |
|---|---|---|---|
| Tan δ 0°C | 0.572 | 0.611 | 0.461 |
| Tan δ 0°C, Normalized | | 0.572 | 0.572 |
| Change [%] | | +7 | -19 |
| | | | |
| Abrasion loss [mm³] | 150 | 143 | 136 |

An overall good performance of compositions according to the invention in SBR functionalized polymer tires (comprising rubber (6) Sprintan SLR 4602 available from the company "Trinseo", see above) was observed.

As in Example 1, the presence of compositions C4 or C5 (compositions of the present invention) in formulations F8 and F9, respectively, reduced the tan δ 60°C value (i.e., the rolling resistance) of the obtained tire in comparison with the reference. The presence of composition C4 in formulation F8 reduced the tan δ 60°C of the obtained tire by +30 % and the presence of composition C5 in formulation F9 reduced the tan δ 60°C of the obtained tire by +23 %.

Additionally, the presence of composition C4 in formulation F8 increased the tan δ 0°C of the obtained tire by +7 %, in comparison with the reference.

Furthermore, an improved abrasion was measured for tires prepared with formulations F8 and F9, comprising compositions C4 or C5, respectively (see last row of table 17). Lower values of abrasion were obtained in comparison with the reference formulation comprising TDAE at almost unchanged hardness of the tire compounds (see rows 9 and 10 of table 17).

## Claims

1. Composition for use as a plasticizer composition in a formulation for a tire or a technical rubber good or for use as an extender oil for decreasing the mooney-viscosity and/or the glass transition temperature (T_{g}) of a polymer composition, wherein the composition comprises as ingredients
- one or more than one ester selected from the group consisting of fatty acid alkyl esters and fatty acid aryl esters,
and
- one or more than one resin selected from the group consisting of coumarone-indene resins, petroleum hydrocarbon resins and phenol formaldehyde resins,
wherein the total amount of said esters and said resins is above 80 % by weight, based on the total amount of the composition.

2. Composition according to claim 1, wherein the total amount of said esters selected from the group consisting of fatty acid alkyl esters and fatty acid aryl esters, and said resins is above 90 % by weight, preferably above 95 % by weight, based on the total amount of the composition.

3. Composition according to any preceding claim, wherein the proportion of the total amount of said esters selected from the group consisting of fatty acid alkyl esters and fatty acid aryl esters is 40 % by weight or lower, based on the total amount of said esters and said resins, preferably 30 % by weight or lower, more preferably in the range of from 10 to 25 % by weight.

4. Composition according to any preceding claim, wherein said one or at least one of said more than one esters selected from the group consisting of fatty acid alkyl esters and fatty acid aryl esters is a compound of formula (I) 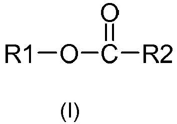 wherein
- R1 is
a substituted or unsubstituted aryl radical having a total number of 22 carbon atoms or less, preferably having a total number of 10 carbon atoms or less, preferably selected from the group consisting of substituted and unsubstituted phenyl,
or
a substituted or unsubstituted, branched or linear, alkyl radical having a total number of 22 carbon atoms or less, preferably selected from the group consisting of ethyl, propyl, butyl, pentyl, hexyl, heptyl, octyl, and benzyl, more preferably 2-ethyl-hexyl, and
- R2 is a substituted or unsubstituted, branched or linear, saturated or unsaturated aliphatic hydrocarbon radical having a total number of 21 carbon atoms or less, preferably a linear, saturated or unsaturated aliphatic hydrocarbon radical having 21 carbon atoms or less, more preferably a linear, unsaturated aliphatic hydrocarbon radical having 21 carbon atoms or less and one, two or three double bonds, wherein R2 most preferably is a linear, unsaturated aliphatic hydrocarbon radical having 17 carbon atoms or less and one double bond.

5. Composition according to any preceding claim, wherein said one or at least one of said more than one esters selected from the group consisting of fatty acid alkyl esters and fatty acid aryl esters is a compound of formula (I) 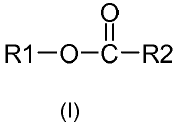 wherein
- R1 is a substituted or unsubstituted, branched or linear, alkyl radical having a total number of 22 carbon atoms or less, preferably selected from the group consisting of ethyl, propyl, butyl, pentyl, hexyl, heptyl, octyl, and benzyl, more preferably 2-ethylhexyl,
and
- R2 is a substituted or unsubstituted, branched or linear, saturated or unsaturated aliphatic hydrocarbon radical having a total number of 21 carbon atoms or less, preferably a linear, saturated or unsaturated aliphatic hydrocarbon radical having 21 carbon atoms or less, more preferably a linear, unsaturated aliphatic hydrocarbon radical having 21 carbon atoms or less and one, two or three double bonds, wherein R2 most preferably is a linear, unsaturated aliphatic hydrocarbon radical having 17 carbon atoms or less and one double bond.

6. Composition according to any preceding claim, wherein said one or at least one of said more than one fatty acid alkyl esters is selected from the group consisting of alkyl arachidonate,
alkyl linoleate,
alkyl linolenate,
alkyl laurate,
alkyl myristate,
alkyl oleate,
alkyl caprate,
alkyl oleate,
alkyl stearate,
alkyl palmitate,
alkyl caprylate
alkyl caproate,
alkyl butyrate,
and
alkyl behenate,
preferably the one or at least one of said more than one fatty acid alkyl esters is 2-ethylhexyl oleate.

7. Composition according to any preceding claim, obtainable by mixing with the other ingredient(s) of the composition one or more than one resin having a softening point according to ASTM D3461-14 in the range of from 5 to 50 °C, preferably in the range of from 20 to 35 °C, and being selected from the group consisting of coumarone-indene resins, petroleum hydrocarbon resins and phenol formaldehyde resins.

8. Composition according to claim 7, obtainable by mixing with the other ingredient(s) of the composition one or more than one resin having a softening point according to ASTM D3461-14 in the range of from 5 to 50 °C, preferably in the range of from 20 to 35 °C, and being selected from the group consisting of coumarone-indene resins and petroleum hydrocarbon resins.

9. Composition according to any preceding claim, comprising
- 2-ethylhexyl oleate,
and
- one or more than one resin selected from the group consisting of coumarone-indene resins and petroleum hydrocarbon resins, wherein the total amount of 2-ethylhexyl oleate and said resins selected from the group consisting of coumarone-indene resins and petroleum hydrocarbon resins is above 95 % by weight, based on the total amount of the composition, and
wherein the proportion of the total amount of said 2-ethylhexyl oleate is 35 % by weight or lower, based on the total amount of said 2-ethylhexyl oleate and said resins, wherein the proportion of the total amount of said 2-ethylhexyl oleate is more preferably in the range of from 10 to 25 % by weight.

10. Use of a composition according to any of claims 1 to 9
(i) as an extender oil for decreasing the mooney-viscosity of a polymer composition
and/or
(ii) as an extender oil for decreasing the glass transition temperature (T_{g}) of a polymer composition
and/or
(iii) as a plasticizer composition in a formulation for a tire or a technical rubber good, preferably in a formulation for a tire comprising one or more fillers selected from the group consisting of silica and carbon black.

11. Use of one or more than one ester selected from the group consisting of fatty acid alkyl esters and fatty acid aryl esters
(i) as co-plasticizer in a formulation for a tire or a technical rubber good, wherein the ester is 2-ethylhexyl oleate
and/or
(ii) as an ingredient of an extender oil for a polymer composition, preferably for decreasing the mooney-viscosity of the polymer composition
and/or
(iii) as an ingredient of an extender oil for a polymer composition for decreasing the glass transition temperature (T_{g}) of the polymer composition.

12. Process of
(a) preparing a formulation for making a tire or a technical rubber good
or
(b) making a tire or a technical rubber good
or
(c) preparing a polymer composition having a decreased mooney-viscosity and/or glass transition temperature (T_{g}),
the process comprising the following steps:
- providing one or more than one ester selected from the group consisting of fatty acid alkyl esters and fatty acid aryl esters,
- providing one or more than one resin selected from the group consisting of coumarone-indene resins, petroleum hydrocarbon resins and phenol formaldehyde resins,
- mixing said one or more than one esters and said one or more than one resin selected from the group consisting of coumarone-indene resins, petroleum hydrocarbon resins and phenol formaldehyde resins with further ingredients,
and
wherein the process comprises:
- preparing a composition according to any of claims 1 to 9 by pre-mixing said one or more than one ester selected from the group consisting of fatty acid alkyl esters and fatty acid aryl esters with said one or more than one resin selected from the group consisting of coumarone-indene resins, petroleum hydrocarbon resins and phenol formaldehyde resins,
- mixing said composition with said further ingredients.

13. Process according to claim 12, wherein one or more of said further ingredients are selected from the group consisting of natural and synthetic rubbers, reinforcing filler, non-reinforcing filler, vulcanization accelerators, pigments, antioxidants, antiozone waxes, cross-linking agents, organic or inorganic coloring agents, activators, and silane coupling agents,
wherein said reinforcing filler or said non-reinforcing filler is preferably selected from the group consisting of silica and carbon black.

14. Formulation for making a tire or a technical rubber good,
obtainable by a process according to any of claims 12 to 13
and/or
comprising a composition according to any of claims 6 to 9.

15. Tire or technical rubber good,
obtainable by a process according to any of claims 12 to 13
and/or
comprising the ingredients of a composition as defined in any of claims 6 to 9
and preferably additionally comprising one or more further ingredients selected from the group consisting of natural and synthetic rubbers, reinforcing filler, non-reinforcing filler, vulcanization accelerators, pigments, antioxidants, antiozone waxes, cross-linking agents, organic or inorganic coloring agents, activators, and silane coupling agents, wherein said reinforcing filler or said non-reinforcing filler is preferably selected from the group consisting of silica and carbon black.

## Patentansprüche

1. Zusammensetzung zur Anwendung als eine Weichmacherzusammensetzung in einer Formulierung für einen Reifen oder eine technische Kautschukware oder zur Anwendung als ein Extenderöl zum Verringern der Mooney-Viskosität und/oder der Glasübergangstemperatur (T_{g}) einer Polymerzusammensetzung, wobei die Zusammensetzung
- einen oder mehr als einen Ester, ausgewählt aus der Gruppe bestehend aus Fettsäurealkylestern und Fettsäurearylestern,
und
- ein oder mehr als ein Harz, ausgewählt aus der Gruppe bestehend aus Coumaron-Inden-Harzen, Erdölkohlenwasserstoffharzen und Phenol-Formaldehydharzen,
als Bestandteile umfasst,
wobei die Gesamtmenge der Ester und der Harze über 80 Gew.-% beträgt, bezogen auf die Gesamtmenge der Zusammensetzung.

2. Zusammensetzung nach Anspruch 1, wobei die Gesamtmenge der Ester, die aus der Gruppe bestehend aus Fettsäurealkylestern und Fettsäurearylestern ausgewählt sind, und der Harze über 90 Gew.-%, vorzugsweise über 95 Gew.-% beträgt, bezogen auf die Gesamtmenge der Zusammensetzung.

3. Zusammensetzung nach einem der voranstehenden Ansprüche, wobei der Anteil der Gesamtmenge der Ester, die aus der Gruppe bestehend aus Fettsäurealkylestern und Fettsäurearylestern ausgewählt sind, 40 Gew.-% oder weniger beträgt, bezogen auf die Gesamtmenge der Ester und der Harze, vorzugsweise 30 Gew.-% oder weniger, bevorzugter im Bereich von 10 bis 25 Gew.-%.

4. Zusammensetzung nach einem der voranstehenden Ansprüche, wobei der eine oder mindestens einer der mehr als einen Ester, die aus der Gruppe bestehend aus Fettsäurealkylestern und Fettsäurearylestern ausgewählt sind, eine Verbindung der Formel (I) ist 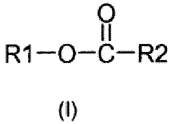 wobei
- R1
ein substituierter oder unsubstituierter Arylrest mit einer Gesamtanzahl von 22 Kohlenstoffatomen oder weniger ist, vorzugsweise mit einer Gesamtanzahl von 10 Kohlenstoffatomen oder weniger, vorzugsweise ausgewählt aus der Gruppe bestehend aus substituiertem und unsubstituiertem Phenyl,
oder
ein substituierter oder unsubstituierter, verzweigter oder linearer Alkylrest mit einer Gesamtanzahl von 22 Kohlenstoffatomen oder weniger, vorzugsweise ausgewählt aus der Gruppe bestehend aus Ethyl, Propyl, Butyl, Pentyl, Hexyl, Heptyl, Octyl und Benzyl, noch bevorzugter 2-Ethylhexyl, ist
und
- R2 ein substituierter oder unsubstituierter, verzweigter oder linearer, gesättigter oder ungesättigter aliphatischer Kohlenwasserstoffrest mit einer Gesamtanzahl von 21 Kohlenstoffatomen oder weniger, vorzugsweise ein linearer, gesättigter oder ungesättigter aliphatischer Kohlenwasserstoffrest mit 21 Kohlenstoffatomen oder weniger, noch bevorzugter ein linearer, ungesättigter aliphatischer Kohlenwasserstoffrest mit 21 Kohlenstoffatomen oder weniger und einer, zwei oder drei Doppelbindungen ist, wobei R2 am bevorzugtesten ein linearer, ungesättigter aliphatischer Kohlenwasserstoffrest mit 17 Kohlenstoffatomen oder weniger und einer Doppelbindung ist.

5. Zusammensetzung nach einem der voranstehenden Ansprüche, wobei der eine oder mindestens einer der mehr als einen Ester, die aus der Gruppe bestehend aus Fettsäurealkylestern und Fettsäurearylestern ausgewählt sind, eine Verbindung der Formel (I) ist 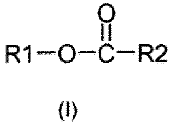 wobei
- R1 ein substituierter oder unsubstituierter, verzweigter oder linearer Alkylrest mit einer Gesamtanzahl von 22 Kohlenstoffatomen oder weniger, vorzugsweise ausgewählt aus der Gruppe bestehend aus Ethyl, Propyl, Butyl, Pentyl, Hexyl, Heptyl, Octyl und Benzyl, noch bevorzugter 2-Ethylhexyl, ist,
und
- R2 ein substituierter oder unsubstituierter, verzweigter oder linearer, gesättigter oder ungesättigter aliphatischer Kohlenwasserstoffrest mit einer Gesamtanzahl von 21 Kohlenstoffatomen oder weniger, vorzugsweise ein linearer, gesättigter oder ungesättigter aliphatischer Kohlenwasserstoffrest mit 21 Kohlenstoffatomen oder weniger, noch bevorzugter ein linearer, ungesättigter aliphatischer Kohlenwasserstoffrest mit 21 Kohlenstoffatomen oder weniger und einer, zwei oder drei Doppelbindungen ist, wobei R2 am bevorzugtesten ein linearer, ungesättigter aliphatischer Kohlenwasserstoffrest mit 17 Kohlenstoffatomen oder weniger und einer Doppelbindung ist.

6. Zusammensetzung nach einem der voranstehenden Ansprüche, wobei der eine oder mindestens einer der mehr als einen Fettsäurealkylester aus der Gruppe ausgewählt ist, die aus
Alkylarachidonat,
Alkyllinoleat,
Alkyllinolenat,
Alkyllaurat,
Alkylmyristat,
Alkyloleat,
Alkylcaprat
Alkyloleat,
Alkylstearat,
Alkylpalmitat,
Alkylcaprylat,
Alkylcaproat,
Alkylbutyrat
und
Alkylbehenat
besteht, wobei der eine oder mindestens einer der mehr als einen Fettsäurealkylester 2-Ethylhexyloleat ist.

7. Zusammensetzung nach einem der voranstehenden Ansprüche, erhältlich durch Mischen eines oder mehrerer Harze mit einem Erweichungspunkt gemäß ASTM D3461-14 im Bereich von 5 bis 50 °C, vorzugsweise im Bereich von 20 bis 35 °C und ausgewählt aus der Gruppe bestehend aus Coumaron-Inden-Harzen, Erdölkohlenwasserstoffharzen und Phenol-Formaldehydharzen, mit dem oder den anderen Bestandteil(en) der Zusammensetzung.

8. Zusammensetzung nach Anspruch 7, erhältlich durch Mischen eines oder mehrerer Harze mit einem Erweichungspunkt gemäß ASTM D3461-14 im Bereich von 5 bis 50 °C, vorzugsweise im Bereich von 20 bis 35 °C und ausgewählt aus der Gruppe bestehend aus Coumaron-Inden-Harzen und Erdölkohlenwasserstoffharzen, mit dem oder den anderen Bestandteil(en) der Zusammensetzung.

9. Zusammensetzung nach einem der voranstehenden Ansprüche, umfassend
- 2-Ethylhexyloleat,
und
- ein oder mehr als ein Harz, ausgewählt aus der Gruppe bestehend aus Coumaron-Inden-Harzen und Erdölkohlenwasserstoffharzen, wobei die Gesamtmenge an 2-Ethylhexyloleat und den Harzen, die aus der Gruppe bestehend aus Coumaron-Inden-Harzen und Erdölkohlenwasserstoffharzen ausgewählt sind, bei über 95 Gew.-% liegt, bezogen auf die Gesamtmenge der Zusammensetzung, und
wobei der Anteil der Gesamtmenge des 2-Ethylhexyloleats 35 Gew.-% oder weniger beträgt, bezogen auf die Gesamtmenge des 2-Ethylhexyloleats und der Harze, wobei der Anteil der Gesamtmenge des 2-Ethylhexyloleats bevorzugter im Bereich von 10 bis 25 Gew.-% liegt.

10. Verwendung einer Zusammensetzung nach einem der Ansprüche 1 bis 9
(i) als ein Extenderöl zum Verringern der Mooney-Viskosität einer Polymerzusammensetzung
und/oder
(ii) als ein Extenderöl zum Verringern der Glasübergangstemperatur (T_{g}) einer Polymerzusammensetzung
und/oder
(iii) als eine Weichmacherzusammensetzung in einer Formulierung für einen Reifen oder eine technische Kautschukware, vorzugsweise in einer Formulierung für einen Reifen, die einen oder mehrere Füllstoffe ausgewählt aus der Gruppe bestehend aus Silika und Ruß umfasst.

11. Verwendung eines oder mehrerer Ester, die aus der Gruppe bestehend aus Fettsäurealkylestern und Fettsäurearylestern ausgewählt sind,
(i) als Co-Weichmacher in einer Formulierung für einen Reifen oder eine technische Kautschukware, wobei der Ester 2-Ethylhexyloleat ist,
und/oder
(ii) als ein Bestandteil eines Extenderöls für eine Polymerzusammensetzung, vorzugsweise zum Verringern der Mooney-Viskosität der Polymerzusammensetzung.
und/oder
(iii) als ein Bestandteil eines Extenderöls für eine Polymerzusammensetzung zum Verringern der Glasübergangstemperatur (T_{g}) der Polymerzusammensetzung.

12. Verfahren zum
(a) Herstellen einer Formulierung zum Herstellen eines Reifens oder einer technischen Kautschukware
oder
(b) Herstellen eines Reifens oder einer technischen Kautschukware
oder
(c) Herstellen einer Polymerzusammensetzung mit verringerter Mooney-Viskosität und/oder Glasübergangstemperatur (T_{g}),
wobei das Verfahren die folgenden Schritte umfasst:
- Bereitstellen eines oder mehrerer Ester, die aus der Gruppe bestehend aus Fettsäurealkylestern und Fettsäurearylestern ausgewählt sind,
- Bereitstellen eines oder mehrerer Harze, die aus der Gruppe bestehend aus Coumaron-Inden-Harzen, Erdölkohlenwasserstoffharzen und Phenol-Formaldehydharzen ausgewählt sind,
- Mischen des einen oder der mehreren Ester(s) und des einen oder der mehreren Harze(s), ausgewählt aus der Gruppe bestehend aus Coumaron-Inden-Harzen, Erdölkohlenwasserstoffharzen und Phenol-Formaldehydharzen, mit weiteren Bestandteilen,
und
wobei das Verfahren Folgendes umfasst:
- Herstellen einer Zusammensetzung nach einem der Ansprüche 1 bis 9 durch Vormischen des einen oder der mehreren Ester(s), ausgewählt aus der Gruppe bestehend aus Fettsäurealkylestern und Fettsäurearylestern, mit dem einen oder den mehreren Harz(en), ausgewählt aus der Gruppe bestehend aus Coumaron-Inden-Harzen, Erdölkohlenwasserstoffharzen und Phenol-Formaldehydharzen,
- Mischen der Zusammensetzung mit den weiteren Bestandteilen.

13. Verfahren nach Anspruch 12, wobei einer oder mehrere der weiteren Bestandteile aus der Gruppe ausgewählt sind, die aus natürlichen und synthetischen Kautschuken, verstärkendem Füllstoff, nichtverstärkendem Füllstoff, Vulkanisationsbeschleunigern, Pigmenten, Antioxidationsmitteln, Anti-Ozon-Wachsen, Vernetzungsmitteln, organischen oder anorganischen Färbemitteln, Aktivatoren und Silankupplungsmittel besteht,
wobei der verstärkende Füllstoff oder der nichtverstärkende Füllstoff vorzugsweise aus der Gruppe ausgewählt ist, die aus Silika und Ruß besteht.

14. Formulierung zum Herstellen eines Reifens oder einer technischen Kautschukware, erhältlich durch ein Verfahren nach einem der Ansprüche 12 bis 13 und/oder
umfassend eine Zusammensetzung nach einem der Ansprüche 6 bis 9.

15. Reifen oder technische Kautschukware,
erhältlich durch ein Verfahren nach einem der Ansprüche 12 bis 13 und/oder
umfassend die Inhaltsstoffe einer Zusammensetzung wie in einem der Ansprüche 6 bis 9 definiert
und vorzugsweise zusätzlich umfassend einen oder mehrere weitere Inhaltsstoffe, ausgewählt aus der Gruppe, die aus natürlichen und synthetischen Kautschuken, verstärkenden Füllstoffen, nicht verstärkenden Füllstoffen, Vulkanisationsbeschleunigern, Pigmenten, Antioxidationsmitteln, Anti-Ozon-Wachsen, Vernetzungsmitteln, organischen oder anorganischen Färbemitteln, Aktivatoren und Silankupplungsmitteln besteht, wobei der verstärkende Füllstoff oder der nicht verstärkende Füllstoff vorzugsweise aus der Gruppe ausgewählt ist, die aus Silika und Ruß besteht.

## Revendications

1. Composition pour une utilisation comme une composition de plastifiant dans une formulation pour un pneu ou un article technique en caoutchouc ou pour une utilisation comme une huile de dilution permettant de réduire la viscosité Mooney et/ou la température de transition vitreuse (T_{g}) d'une composition polymère, dans laquelle la composition comprend comme ingrédients
- un ou plus d'un ester choisis dans le groupe comprenant des esters alkyliques d'acide gras et des esters aryliques d'acide gras,
et
- une ou plus d'une résine choisies dans le groupe comprenant des résines coumarone-indène, des résines hydrocarbonées de pétrole et des résines phénol-formaldéhyde,
dans laquelle la quantité totale desdits esters et desdites résines est au-dessus de 80 % en poids, sur la base de la quantité totale de la composition.

2. Composition selon la revendication 1, dans laquelle la quantité totale desdits esters choisis dans le groupe comprenant des esters alkyliques d'acide gras et des esters aryliques d'acide gras, et desdites résines est au-dessus de 90 % en poids, de préférence au-dessus de 95 % en poids, sur la base de la quantité totale de la composition.

3. Composition selon une quelconque revendication précédente, dans laquelle la proportion de la quantité totale desdits esters choisis dans le groupe comprenant des esters alkyliques d'acide gras et des esters aryliques d'acide gras est de 40 % en poids ou inférieure, sur la base de la quantité totale desdits esters et desdites résines, de préférence 30 % en poids ou inférieure, de manière davantage préférée dans la plage de 10 à 25 % en poids.

4. Composition selon une quelconque revendication précédente, dans laquelle lesdits un ou au moins un desdits plus d'un ester choisis dans le groupe comprenant des esters alkyliques d'acide gras et des esters aryliques d'acide gras sont un composé de la formule (I) 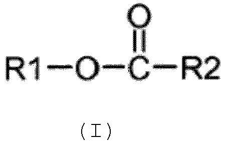 dans laquelle
- R1 est
un radical aryle substitué ou non substitué ayant un nombre total de 22 atomes de carbone ou moins, de préférence ayant un nombre total de 10 atomes de carbone ou moins, de préférence choisi dans le groupe comprenant du phényle substitué et non substitué,
ou
un radical alkyle, ramifié ou linéaire, substitué ou non substitué ayant un nombre total de 22 atomes de carbone ou moins, de préférence choisi dans le groupe comprenant de l'éthyle, du propyle, du butyle, du pentyle, de l'hexyle, de l'heptyle, de l'octyle, et du benzyle, de manière davantage préférée du 2-éthylhexyle,
et
- R2 est un radical hydrocarbure aliphatique saturé ou non saturé, ramifié ou linéaire, substitué ou non substitué ayant un nombre total de 21 atomes de carbone ou moins, de préférence un radical hydrocarbure aliphatique saturé ou non saturé linéaire ayant 21 atomes de carbone ou moins, de manière davantage préférée un radical hydrocarbure aliphatique non saturé linéaire ayant 21 atomes de carbone ou moins et une, deux ou trois doubles liaisons, dans laquelle R2 de manière préférée entre toutes est un radical hydrocarbure aliphatique non saturé linéaire ayant 17 atomes de carbone ou moins et une double liaison.

5. Composition selon une quelconque revendication précédente, dans laquelle lesdits un ou au moins un desdits plus d'un ester choisis dans le groupe comprenant des esters alkyliques d'acide gras et des esters aryliques d'acide gras sont un composé de la formule (I) 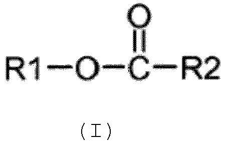 dans laquelle
- R1 est un radical alkyle, ramifié ou linéaire, substitué ou non substitué ayant un nombre total de 22 atomes de carbone ou moins, de préférence choisi dans le groupe comprenant de l'éthyle, du propyle, du butyle, du pentyle, de l'hexyle, de l'heptyle, de l'octyle, et du benzyle, de manière davantage préférée du 2-éthylhexyle,
et
- R2 est un radical hydrocarbure aliphatique saturé ou non saturé, ramifié ou linéaire, substitué ou non substitué ayant un nombre total de 21 atomes de carbone ou moins, de préférence un radical hydrocarbure aliphatique saturé ou non saturé linéaire ayant 21 atomes de carbone ou moins, de manière davantage préférée un radical hydrocarbure aliphatique non saturé linéaire ayant 21 atomes de carbone ou moins et une, deux ou trois doubles liaisons, dans laquelle R2 de manière préférée entre toutes est un radical hydrocarbure aliphatique non saturé linéaire ayant 17 atomes de carbone ou moins et une double liaison.

6. Composition selon une quelconque revendication précédente, dans laquelle lesdits un ou au moins un desdits plus d'un ester alkylique d'acide gras sont choisis dans le groupe comprenant
de l'arachidonate d'alkyle,
du linoléate d'alkyle,
du linolénate d'alkyle,
du laurate d'alkyle,
du myristate d'alkyle,
de l'oléate d'alkyle,
du caprate d'alkyle,
de l'oléate d'alkyle,
du stéarate d'alkyle,
du palmitate d'alkyle,
du caprylate d'alkyle,
du caproate d'alkyle,
du butyrate d'alkyle,
et
du béhénate d'alkyle,
de préférence les un ou au moins un desdits plus d'un ester alkylique d'acide gras sont de l'oléate de 2-éthylhexyle.

7. Composition selon une quelconque revendication précédente, pouvant être obtenue en mélangeant avec le ou les autres ingrédients de la composition une ou plus d'une résine ayant un point de ramollissement selon l'ASTM D3461-14 dans la plage de 5 à 50 °C, de préférence dans la plage de 20 à 35 °C, et étant choisies dans le groupe comprenant des résines coumarone-indène, des résines hydrocarbonées de pétrole et des résines phénol-formaldéhyde.

8. Composition selon la revendication 7, pouvant être obtenue en mélangeant avec le ou les autres ingrédients de la composition une ou plus d'une résine ayant un point de ramollissement selon l'ASTM D3461-14 dans la plage de 5 à 50 °C, de préférence dans la plage de 20 à 35 °C, et étant choisies dans le groupe comprenant des résines coumarone-indène et des résines hydrocarbonées de pétrole.

9. Composition selon une quelconque revendication précédente, comprenant
- de l'oléate de 2-éthylhexyle,
et
- une ou plus d'une résine choisies dans le groupe comprenant des résines coumarone-indène et des résines hydrocarbonées de pétrole, dans laquelle la quantité totale d'oléate de 2-éthylhexyle et desdites résines choisies dans le groupe comprenant des résines coumarone-indène et des résines hydrocarbonées de pétrole est au-dessus de 95 % en poids, sur la base de la quantité totale de la composition, et
dans laquelle la proportion de la quantité totale dudit oléate de 2-éthylhexyle est de 35 % en poids ou inférieure, sur la base de la quantité totale dudit oléate de 2-éthylhexyle et desdites résines, dans laquelle la proportion de la quantité totale dudit oléate de 2-éthylhexyle est de manière davantage préférée dans la plage de 10 à 25 % en poids.

10. Utilisation d'une composition selon l'une quelconque des revendications 1 à 9
(i) comme une huile de dilution permettant de réduire la viscosité Mooney d'une composition polymère
et/ou
(ii) comme une huile de dilution permettant de réduire la température de transition vitreuse (T_{g}) d'une composition polymère
et/ou
(iii) comme une composition de plastifiant dans une formulation pour un pneu ou un article technique en caoutchouc, de préférence dans une formulation pour un pneu comprenant une ou plusieurs charges choisies dans le groupe comprenant de la silice et du noir de carbone.

11. Utilisation d'un ou plus d'un ester choisis dans le groupe comprenant des esters alkyliques d'acide gras et des esters aryliques d'acide gras
(i) comme co-plastifiant dans une formulation pour un pneu ou un article technique en caoutchouc, dans laquelle l'ester est de l'oléate de 2-éthylhexyle
et/ou
(ii) comme un ingrédient d'une huile de dilution pour une composition polymère, de préférence permettant de réduire la viscosité Mooney de la composition polymère
et/ou
(iii) comme un ingrédient d'une huile de dilution pour une composition polymère permettant de réduire la température de transition vitreuse (T_{g}) de la composition polymère.

12. Procédé de
(a) préparation d'une formulation permettant de fabriquer un pneu ou un article technique en caoutchouc
ou
(b) fabrication d'un pneu ou d'un article technique en caoutchouc
ou
(c) préparation d'une composition polymère ayant une viscosité Mooney et/ou une température de transition vitreuse (T_{g}) réduites,
le procédé comprenant les étapes suivantes :
- la fourniture d'un ou plus d'un ester choisis dans le groupe comprenant des esters alkyliques d'acide gras et des esters aryliques d'acide gras,
- la fourniture d'une ou plus d'une résine choisies dans le groupe comprenant des résines coumarone-indène, des résines hydrocarbonées de pétrole et des résines phénol-formaldéhyde,
- le mélange desdits un ou plus d'un ester et desdites une ou plus d'une résine choisies dans le groupe comprenant des résines coumarone-indène, des résines hydrocarbonées de pétrole et des résines phénol-formaldéhyde avec d'autres ingrédients,
et
dans lequel le procédé comprend :
- la préparation d'une composition selon l'une quelconque des revendications 1 à 9 en prémélangeant lesdits un ou plus d'un ester choisis dans le groupe comprenant des esters alkyliques d'acide gras et des esters aryliques d'acide gras avec lesdites une ou plus d'une résine choisies dans le groupe comprenant des résines coumarone-indène, des résines hydrocarbonées de pétrole et des résines phénol-formaldéhyde,
- le mélange de ladite composition avec lesdits autres ingrédients.

13. Procédé selon la revendication 12, dans lequel un ou plusieurs desdits autres ingrédients sont choisis dans le groupe comprenant des caoutchoucs naturels et synthétiques, une charge renforçante, une charge non renforçante, des accélérateurs de vulcanisation, des pigments, des antioxydants, des cires anti-ozone, des agents de réticulation, des colorants organiques ou inorganiques, des activateurs, et des agents de couplage de silane,
dans lequel ladite charge renforçante ou ladite charge non renforçante sont de préférence choisies dans le groupe comprenant de la silice et du noir de carbone.

14. Formulation permettant de fabriquer un pneu ou un article technique en caoutchouc,
pouvant être obtenue par un procédé selon l'une quelconque des revendications 12 et 13
et/ou
comprenant une composition selon l'une quelconque des revendications 6 à 9.

15. Pneu ou article technique en caoutchouc,
pouvant être obtenus par un procédé selon l'une quelconque des revendications 12 et 13
et/ou
comprenant les ingrédients d'une composition telle que définie dans l'une quelconque des revendications 6 à 9
et de préférence comprenant en plus un ou plusieurs autres ingrédients choisis dans le groupe comprenant des caoutchoucs naturels et synthétiques, une charge renforçante, une charge non renforçante, des accélérateurs de vulcanisation, des pigments, des antioxydants, des cires anti-ozone, des agents de réticulation, des colorants organiques ou inorganiques, des activateurs, et des agents de couplage de silane, dans lesquels ladite charge renforçante ou ladite charge non renforçante sont de préférence choisies dans le groupe comprenant de la silice et du noir de carbone.
